(19) Europäisches Patentamt
European Patent Office
Office européen des brevets

(11) EP 2 562 215 B1

(12) **EUROPEAN PATENT SPECIFICATION**

(45) Date of publication and mention of the grant of the patent:
**30.03.2016 Bulletin 2016/13**

(51) Int Cl.:
***C08L 23/10*** *(2006.01)* ***F16L 9/12*** *(2006.01)*

(21) Application number: **11178968.1**

(22) Date of filing: **26.08.2011**

(54) **POLYPROPYLENE BLEND FOR PIPES**

POLYPROPYLEN-GEMISCH FÜR LEITUNGSROHRE

MÉLANGE DE POLYPROPYLÈNE POUR CONDUITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.02.2013 Bulletin 2013/09**

(73) Proprietor: **Borealis AG**
**1220 Vienna (AT)**

(72) Inventors:
- **Tynys, Antti**
**4020 Linz (AT)**
- **Ruemer, Franz**
**A-4222 St. Georgen/Gusen (AT)**
- **Malm, Bo**
**02110 Espoo (FI)**
- **Machl, Doris**
**4931 Mettmach (AT)**

(74) Representative: **Kador & Partner**
**Corneliusstraße 15**
**80469 München (DE)**

(56) References cited:
**EP-A1- 1 382 638**
**EP-A1- 2 216 347**
**EP-A1- 2 239 298**
**EP-A1- 2 361 950**
**WO-A1-2007/017360**
**WO-A1-2009/054832**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 562 215 B1

Printed by Jouve, 75001 PARIS (FR)

## Description

The present invention relates to (β-nucleated polypropylene blends of a low MFR polypropylene homo- or copolymer made with a single site catalyst (SSC PP) with a second polypropylene component, the blends showing improved extrudability and pressure resistance.

Polypropylene-based polymers have many characteristics which make them suitable for many applications like cables, pipes, fittings, moulded articles, foams polypropylene as pipe material is mainly used in non-pressure applications, like for cable protection as well as for culverts (e.g. road and rail), fittings and profiles. Polypropylene is also used for pressure pipes, mainly for hot&cold water and industrial pipes, i.e. for the transport of liquid, e.g. water, during which the fluid can be pressurized.

It is known that alpha-nucleated polypropylene has relatively high stiffness but is suffering in impact properties, especially at lower temperatures e.g. at 0°C.

Beta-nucleated polypropylene generally has lower stiffness than alpha-nucleated polypropylene, however an improvement of the impact strength in technical polymer articles can be achieved by the selective production of the beta-modification in crystalline isotactic polypropylene, which is especially significant for low temperature applications.

Chen et al. (Polymer 43 (2002) 6505-14) describe such an improvement in impact strength. Beta-phase PP-homopolymers and PP-impact copolymers showed a superior toughness as compared to the alpha-versions. The crystallinity of the alpha- and beta-modifications was assessed by wide-angle X-ray scattering (WAXS).

In general, polypropylene-based materials to be chosen for pipe applications should result in products of excellent pressure test performance as well as high impact performance while still maintaining good stiffness. Furthermore the extrudability of the material should be sufficiently high.

However, these properties are interrelated to each other and very often behave in a conflicting manner, i.e. improving a specific property can only be accomplished on the expense of another property.

Most polypropylene resins suitable for pipe applications are produced in a multimodal process using a Ziegler-Natta (ZN) catalyst in order to produce high $M_w$ fraction for sufficient creep properties and broad molecular weight distribution (MWD), respectively polydispersity index (PI) for extrudability.

Examples for ZN catalyzed beta-nucleated $C_3/C_2$- and $C_3/C_4$-random copolymers are described i.a. in EP 1 448 631 or EP 2 014 715. ZN catalyzed beta-nucleated $C_3/C_6$-random copolymers are described i.a. in EP 2 279 216.

EP2361950 discloses random propylene copolymers for pipes and the use of beta nucleating agents. EP2216347 discloses polypropylene compositions prepared with different catalysts and the use of beta nucleating agents.

An important target for the future is producing polypropylene pressure pipes with single site catalysts (SSC), because these catalysts give very high purity polymers and they have high response to α-olefins. The problem is that these catalysts produce narrow molecular weight distribution and their capability to produce very low MFR at acceptable activity is very limited, whereby the final properties of the SSC-based polypropylene are not able to fulfil the needed properties in terms of extrudability, pressure resistance and creep properties. Typically, due to the poor extrudability related to narrow MWD, respectively PI, it is hardly ever possible to produce pressure pipes from SSC-based homo- or random polypropylene polymers with commercially feasible production conditions.

In the state of the art there is no disclosure of polypropylene pipes made from good extrudable SSC PP based polymers showing high pressure resistance with on the same time stiffness as well as the impact strength on high levels.

Thus the object of the present invention is to provide a polymer composition based on polypropylene made with SSC which enables the manufacture of pipes in an improved manner due to improved extrudability, the pipes showing an excellent pressure test performance by keeping the stiffness as well as the impact strength on high levels. Moreover the present invention is directed to pipes with the foresaid properties.

The finding of the present invention is to provide a β-nucleated polypropylene blend of a SSC propylene homo- or random copolymer component and a second polypropylene component.

Thus the present invention is directed to a polypropylene blend composition for pipe production having

a shear thinning index SHI (0/50) measured according to ISO 6271-10 of at least 5;

a polydispersity index PI of at least 3.0; and

an MFR2 (230°C) of 0.1 to 0.8 g/10min measured according to ISO 1133 the blend comprising

(a) component (A) being a propylene homo- or copolymer produced in a polymerization process in the presence of a single site catalyst system comprising a transition metal compound of the formula (I)

Rn(Cp')2MX2 (I)

wherein

"M" is zirconium or hafnium,

each "X" is independently a monovalent anionic σ-ligand,

each "Cp"' is a cyclopentadienyl-type organic ligand independently selected from the group consisting of substituted cyclopentadienyl, substituted indenyl, substituted tetrahydroindenyl, and substituted or unsubstituted fluorenyl, said organic ligands coordinate to the transition metal (M),

"R" is a bivalent bridging group linking said organic ligands (cp'),

"n" is 1 or 2,

and

(b) component (B) being a second propylene homo- or copolymer made with a Ziegler-Natta catalyst,
wherein either component (A) and/or component (B) and/or the polypropylene blend is/are (β-nucleated.

Surprisingly it has been found out that with said polymer blend the extrudability of the SSC-based polypropylene during pipe extrusion improves markedly, which enables the production of pipes with commercially feasible production conditions. Additionally pipes are obtainable having superior pressure test performance compared to pipes made of Ziegler-Natta based polypropylene being state of the art. Moreover not only the extrudability of the SSC-based polypropylene blend and the pressure test performance of the pipes based on the inventive polymer blend are excellent but additionally also the stiffness and the impact performance of the pipe and the polypropylene blend is excellent or at least comparable.

The polypropylene blend must comprise Component (A) being a propylene homo- or copolymer made with a single site catalyst.

Component (A) thus can be a homopolymer (A-h).

The expression homopolymer used in the instant invention relates to a polypropylene that consists substantially, i.e. of at least 99.9 wt% of propylene units. In a preferred embodiment only propylene units in the propylene homopolymer are detectable. The comonomer content can be determined with FT infrared spectroscopy, as described below in the examples.

Even more preferred the propylene homopolymer is an isotactic propylene homopolymer. Thus it is preferred that the propylene homopolymer has a rather high pentad concentration, i.e. higher than 90 %, more preferably higher than 92 %, still more preferably higher than 93 % and yet more preferably higher than 95 %.

Moreover the propylene homopolymer (A-h) can be unimodal or multimodal, like bimodal.

Component (A) can also be a copolymer of propylene with ethylene and/or an α-olefin (A-c).

This polypropylene copolymer is a copolymer which contains 90.0 to 99.8 wt%, preferably 94.0 - 99.8 wt%, more preferably 95.5 - 99.8 wt% of propylene and 0.2 to 10 wt%, preferably 0.2 - 6.0 wt%, more preferably 0.2 - 4.5 wt% of one or more of ethylene and/or a $C_4$-$C_8$ α-olefins.

The $C_4$-$C_8$ α-olefin is preferably selected from 1-butene, 1-pentene, 1-hexene, 4-methyl-1-pentene and 1-octene. Particularly preferred is 1-butene or 1-hexene.

Thus preferred comonomers are ethylene, 1-butene and 1-hexene or mixtures therefrom. However, it is more preferred that the propylene copolymer does not comprise further comonomer(s), e.g. 1-hexene or 1-butene or ethylene is the only comonomer of the propylene copolymer (binary propylene-hexene or propylene-butene or propylene-ethylene copolymer).

The binary propylene-1-hexene copolymer is particularly preferred.

As stated above the one comonomer like e.g. 1-hexene is mandatory whereas other α-olefins can be additionally present. However the amount of additional α-olefins shall preferably not exceed the amount of the mandatory comonomer in the propylene copolymer (A-c).

The comonomer content of the propylene copolymer (A-c) can be determined with FT infrared spectroscopy, as described below in the examples.

More preferably the above defined propylene copolymer (A-c) is a random copolymer. Thus a random propylene copolymer according to the present invention is a random propylene copolymer produced by statistical insertion of units of 1-hexene or 1-butene or ethylene (if present with units of a second alpha-olefin, as defined above, to give a random terpolymer). The randomness indicates the amount of isolated comonomer units, i.e. those which have no other comonomer units in the neighbour, compared to the total amount of comonomers in the polymer chain. In a preferred embodiment, the randomness of the propylene copolymer (A-c) is at least 30 %, more preferably at least 50 %, even more preferably at least 60 %, and still more preferably at least 65 %.

Additionally it is preferred that the propylene copolymer (A-c) is an isotactic propylene copolymer. Thus it is preferred that the propylene copolymer has a rather high pentad concentration, i.e. higher than 90 %, more preferably higher than 92 %, still more preferably higher than 95 % and yet more preferably higher than 98 %.

Moreover the propylene copolymer (A-c) can be unimodal or multimodal, like bimodal. However it is preferred that the propylene copolymer (A-c) is bimodal.

The expression "multimodal" or "bimodal" used herein refers to the modality of the polymer, i.e. the form of its molecular weight distribution curve, which is the graph of the molecular weight fraction as a function of its molecular weight. As will be explained below, the polymer components of the present invention can be produced in a sequential step process, using reactors in serial configuration and operating at different reaction conditions. As a consequence, each fraction prepared in a specific reactor will have its own molecular weight distribution. When the molecular weight distribution curves from these fractions are superimposed to obtain the molecular weight distribution curve of the final polymer, that curve may show two or more maxima or at least be distinctly broadened when compared with curves for the individual fractions. Such a polymer, produced in two or more serial steps, is called bimodal or multimodal, depending on the number of steps.

Further it is preferred that component (A) has a rather low melt flow rate. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined dye under specified temperature and pressure conditions and the measure of viscosity of the polymer which, in turn, for each type of polymer is mainly influenced by its molecular weight but also by its degree of branching. The melt flow rate measured under a load of 2.16 kg at 230 °C (ISO 1133) is denoted as MFR2 (230 °C).

Accordingly it is preferred that component (A) has a melt flow rate MFR2 (230 °C) of not more than 5 g/10min, more preferably not more than 2 g/10min, like not more than 0.9 g/10min.

In addition, it is mandatory that component (A) as defined above is produced in a polymerization process in the presence of the catalyst system as defined below.

The equipment of the polymerization process can comprise any polymerization reactors of conventional design for producing component (A). For the purpose of the present invention "slurry reactor" designates any reactor, such as a continuous or simple batch stirred tank reactor or loop reactor, operating in bulk or slurry and in which the polymer forms in particulate form. "Bulk" means a polymerization in reaction medium that comprises at least 60 wt% monomer. According to a preferred embodiment the slurry reactor comprises (is) a bulk loop reactor. By "gas phase reactor" is meant any mechanically mixed or fluid bed reactor. Preferably the gas phase reactor comprises a mechanically agitated fluid bed reactor with gas velocities of at least 0.2 m/sec.

Thus, the polymerization reactor system can comprise one or more conventional stirred tank slurry reactors, as described in WO 94/26794, and/or one or more gas phase reactors.

Preferably the reactors used are selected from the group of loop and gas phase reactors and, in particular, the process employs at least one loop reactor and at least one gas phase reactor. It is also possible to use several reactors of each type, e.g. one loop reactor and two or three gas phase reactors or two loop reactors and one gas phase reactor, in series.

In addition to the actual polymerization reactors used for producing component (A) the polymerization reaction system can also include a number of additional reactors, such as pre- and/or post-reactors. The pre-reactors include any reactor for pre-polymerizing the catalyst with propylene. The post-reactors include reactors used for modifying and improving the properties of the polymer product.

All reactors of the reactor system are preferably arranged in series.

The gas phase reactor can be an ordinary fluidized bed reactor, although other types of gas phase reactors can be used. In a fluidized bed reactor, the bed consists of the formed and growing polymer particles as well as still active catalyst come along with the polymer fraction. The bed is kept in a fluidized state by introducing gaseous components, for instance monomer on such flowing rate which will make the particles act as a fluid. The fluidizing gas can contain also inert carrier gases, like nitrogen and also hydrogen as a modifier. The fluidized gas phase reactor can be equipped with a mechanical mixer.

The gas phase reactor used can be operated in the temperature range of 50 to 115 °C, preferably between 60 and 110 °C and the reaction pressure between 5 and 50 bar and the partial pressure of monomer between 2 and 45 bar.

The pressure of the effluent, i.e. the polymerization product including the gaseous reaction medium, can be released after the gas phase reactor in order optionally to separate part of the gaseous and possible volatile components of the product, e.g. in a flash tank. The overhead stream or part of it is re-circulated to the reactor.

Multimodal polymers can be produced according to several processes which are described, e.g. in WO 92/12182, EP 0 887 379, and WO 98/58976.

A preferred multistage process is a "loop-gas phase"-process, such as developed by Borealis (known as BORSTAR® technology) described e.g. in patent literature, such as in EP 0 887 379 or in WO 92/12182.

The polymerization takes place in the presence of a solid single site catalyst (SSC) system, said solid single site catalyst system comprises

(i) a transition metal compound of formula (I)

Rn(Cp')2MX2 (I)

wherein

"M" is zirconium (Zr) or hafnium (Hf),
each "X" is independently a monovalent anionic Q-ligand,
each "Cp' " is a cyclopentadienyl-type organic ligand independently selected from the group consisting of substituted cyclopentadienyl, substituted indenyl, substituted tetrahydroindenyl, and substituted or unsubstituted fluorenyl, said organic ligands coordinate to the transition metal (M),
"R" is a bivalent bridging group linking said organic ligands (Cp'),
"n" is 1 or 2, preferably 1, and

(ii) optionally a cocatalyst (Co) comprising an element (E) of group 13 of the periodic table (IUPAC), preferably a cocatalyst (Co) comprising a compound of Al.

In one specific embodiment the solid single site catalyst system has a porosity measured according ASTM 4641 of less than 1.40 ml/g and/or a surface area measured according to ASTM D 3663 of lower than 25 $m^2/g$. Preferably the solid catalyst system (SCS) has a surface area of lower than 15 $m^2/g$, yet still lower than 10 $m^2/g$ and most preferred lower than 5 $m^2/g$, which is the lowest measurement limit. The surface area according to this invention is measured according to ASTM D 3663 ($N_2$).
Alternatively or additionally it is appreciated that the solid single site catalyst system has a porosity of less than 1.30 ml/g and more preferably less than 1.00 ml/g. The porosity has been measured according to ASTM 4641 ($N_2$). In another preferred embodiment the porosity is not detectable when determined with the method applied according to ASTM 4641 (N2).

Furthermore the solid single site catalyst system typically has a mean particle size of not more than 500 μm, i.e. preferably in the range of 2 to 500 μm, more preferably 5 to 200 μm. It is in particular preferred that the mean particle size is below 80 still more preferably below 70 μm. A preferred range for the mean particle size is 5 to 70 μm, or even 10 to 60 μm.

As stated above the transition metal (M) is zirconium (Zr) or hafnium (Hf), preferably zirconium (Zr).

The term "σ-ligand" is understood in the whole description in a known manner, i.e. a group bound to the metal via a sigma bond. Thus the anionic ligands "X" can independently be halogen or be selected from the group consisting of R', OR', $SiR'_3$, $OSiR'_3$, $OSO_2CF_3$, OCOR', SR', $NR'_2$ or $PR'_2$ group wherein R' is independently hydrogen, a linear or branched, cyclic or acyclic, $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl, $C_7$-$C_{20}$-arylalkyl, $C_7$-$C_{20}$-alkylaryl, $C_8$-$C_{20}$-arylalkenyl, in which the R' group can optionally contain one or more heteroatoms belonging to groups 14 to 16. In a preferred embodiments the anionic ligands "X" are identical and either halogen, like Cl, or methyl or benzyl.

A preferred monovalent anionic ligand is halogen, in particular chlorine (Cl).

The substituted cyclopentadienyl-type ligand(s) may have one or more substituent(s) being selected from the group consisting of halogen, hydrocarbyl (e.g. $C_1$-$C_{20}$-alkyl), $C_2$-$C_{20}$-alkenyl, $C_2$-$C_{20}$-alkynyl, , $C_3$-$C_{20}$-cycloalkyl, like $C_1$,-$C_{20}$-alkyl substituted $C_5$-$C_{20}$-cycloalkyl, $C_6$-$C_{20}$-aryl, $C_5$-$C_{20}$-cycloalkyl substituted $C_1$-$C_{20}$-alkyl wherein the cycloalkyl residue is substituted by $C_1$-$C_{20}$-alkyl, $C_7$-$C_{20}$-arylalkyl, $C_3$-**C**$_{12}$-cycloalkyl which contains 1, 2, 3 or 4 heteroatom(s) in the ring moiety, $C_6$-$C_{20}$-heteroaryl, $C_1$-$C_{20}$-haloalkyl, -SiR"$_3$ , -SR", -PR"$_2$ or -NR"$_2$, each R" is independently a hydrogen or hydrocarbyl (e. g. $C_1$-$C_{20}$-alkyl, $C_1$-$C_{20}$-alkenyl, $C_2$-$C_{20}$-alkynyl, $C_3$-$C_2$-cycloalkyl, or $C_6$-$C_{20}$-aryl) or e.g. in case of -NR"$_2$, the two substituents R" can form a ring, e.g. five-or six-membered ring, together with the nitrogen atom wherein they are attached to.

Further "R" of formula (I) is preferably a bridge of 1 to 4 atoms, such atoms being independently carbon (C), silicon (Si), germanium (Ge) or oxygen (O) atom(s), whereby each of the bridge atoms may bear independently substituents, such as $C_1$-$C_{20}$-hydrocarbyl, tri($C_1$-$C_{20}$-kyl)silyl, tri($C_1$-$C_{20}$-alkyl)siloxy and more preferably "R" is a one atom bridge like e.g. -SiR'''$_2$-, wherein each R''' is independently $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl, alkylaryl or arylalkyl, or tri($C_1$-$C_{20}$-alkyl)silyl- residue, such as trimethylsilyl-, or the two R''' can be part of a ring system including the Si bridging atom.

In a preferred embodiment the transition metal compound has the formula (II)

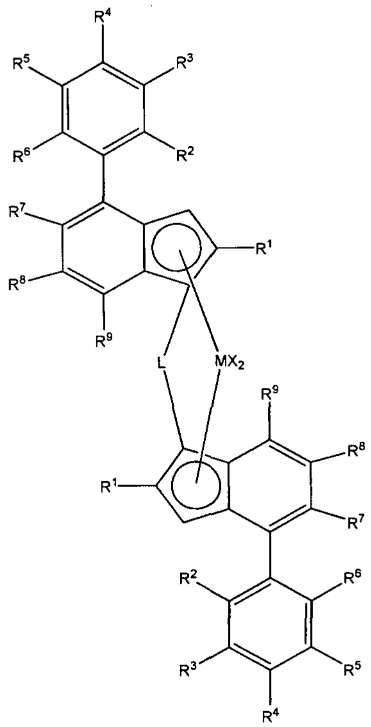

wherein

M is zirconium (Zr) or hafnium (Hf), preferably zirconium (Zr),

X are ligands with a σ-bond to the metal "M", preferably those as defined above for formula (I), preferably chlorine (Cl) or methyl ($CH_3$), the former especially preferred,

$R^1$ are equal to or different from each other, preferably equal to, and are selected from the group consisting of linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$ cycloalkyl, $C_6$-$C_{20}$ aryl, $C_7$-$C_{20}$ alkylaryl, and $C_7$-$C_{20}$ arylalkyl, optionally containing one or more heteroatoms of groups 14 to 16 of the Periodic Table (IUPAC),
preferably are equal to or different from each other, preferably equal to, and are $C_1$-$C_{10}$ linear or branched hydrocarbyl, more preferably are equal to or different from each other, preferably equal to, and are $C_1$-$C_6$ linear or branched alkyl,

$R^2$ to $R^6$ are equal to or different from each other and are selected from the group consisting of hydrogen, linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$-cycloalkyl, $C_6$-$C_{20}$-aryl, $C_7$-$C_{20}$-alkylaryl, and $C_7$-$C_{20}$-arylalkyl, optionally containing one or more heteroatoms of groups 14 to 16 of the Periodic Table (IUPAC), preferably are equal to or different from each other and are $C_1$-$C_{10}$ linear or branched hydrocarbyl, more preferably are equal to or different from each other and are $C_1$-$C_6$ linear or branched alkyl,

$R^7$ and $R^8$ are equal to or different from each other and selected from the group consisting of hydrogen, linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$ alkyl, $C_3$-$C_{20}$-cycloalkyl, $C_6$-$C_{20}$ aryl, $C_7$-$C_{20}$ alkylaryl, $C_7$-$C_{20}$ arylalkyl, optionally containing one or more heteroatoms of groups 14 to 16 of the Periodic Table (IUPAC), $SiR^{10}_3$, $GeR^{10}_3$, $OR^{10}$, $SR^{10}$ and $NR^{10}_2$, wherein

$R^{10}$ is selected from the group consisting of linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$-cycloalkyl, $C_6$-$C_{20}$-aryl, $C_7$-$C_{20}$-alkylaryl, and $C_7$-$C_{20}$-arylalkyl, optionally containing one or more heteroatoms of groups 14 to 16 of the Periodic Table (IUPAC),

and/or

$R^7$ and $R^3$ being optionally part of a $C_4$-$C_{20}$-carbon ring system together with the indenyl carbons to which they are attached, preferably a $C_5$ ring, optionally one carbon atom can be substituted by a nitrogen, sulfur or oxygen atom,

$R^9$ are equal to or different from each other and are selected from the group consisting of hydrogen, linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$ cycloalkyl, $C_6$-$C_{20}$-aryl, $C_7$-$C_{20}$-alkylaryl, $C_7$-$C_{20}$-arylalkyl, $OR^{10}$, and $Sir^{10}$,
preferably $R^9$ are equal to or different from each other and are H or $CH_3$,
wherein $R^{10}$ is defined as before,

L is a bivalent group bridging the two indenyl ligands, preferably being a $C_2R^{11}{}_4$ unit or a $SiR^{11}{}_2$ or $GeR^{11}{}_2$, wherein,

$R^{11}$ is selected from the group consisting of H, linear saturated $C_1$-$C_{20}$-alkyl, linear unsaturated $C_1$-$C_{20}$-alkyl, branched saturated $C_1$-$C_{20}$-alkyl, branched unsaturated $C_1$-$C_{20}$-alkyl, $C_3$-$C_{20}$-cycloalkyl, $C_6$-$C_{20}$-aryl, $C_7$-$C_{20}$-alkylaryl or $C_7$-$C_{20}$-arylalkyl, optionally containing one or more heteroatoms of groups 14 to 16 of the Periodic Table (IUPAC),

preferably $Si(CH3)_2$, $SiCH_3C_6H_{11}$, or $SiPh_2$, wherein $C_6H_{11}$, is cyclohexyl.

Preferably the transition metal compound of formula (II) is $C_2$-symmetric or pseudo-$C_2$-symmetric. Concerning the definition of symmetry it is referred to Resconi et al. Chemical Reviews, 2000, Vol. 100, No. 4 1263.

Preferably the residues $R^1$ are equal to or different from each other, more preferably equal, and are selected from the group consisting of linear saturated $C_1$-$C_{10}$-alkyl, linear unsaturated $C_1$-$C_{10}$-alkyl, branched saturated $C_1$-$C_{10}$-alkyl, branched unsaturated $C_1$-$C_{10}$-alkyl and $C_7$-$C_{12}$-arylalkyl. Even more preferably the residues $R^1$ are equal to or different from each other, more preferably equal, and are selected from the group consisting of linear saturated $C_1$-$C_6$-alkyl, linear unsaturated $C_1$-$C_6$-alkyl, branched saturated $C_1$-$C_6$-alkyl, branched unsaturated $C_1$-$C_6$-alkyl and $C_7$-$C_{10}$-arylalkyl. Yet more preferably the residues $R^1$ are equal to or different from each other, more preferably equal, and are selected from the group consisting of linear or branched $C_1$-$C_4$-hydrocarbyl, such as for example methyl or ethyl.

Preferably the residues $R^2$ to $R^6$ are equal to or different from each other and linear saturated $C_1$-$C_4$-alkyl or branched saturated $C_1$,-$C_4$-alkyl. Even more preferably the residues $R^2$ to $R^6$ are equal to or different from each other, more preferably equal, and are selected from the group consisting of methyl, ethyl, iso-propyl and tert-butyl.

Preferably $R^7$ and $R^8$ are equal to or different from each other and are selected from hydrogen and methyl, or they are part of a 5-methylene ring including the two indenyl ring carbons to which they are attached. In another preferred embodiment, $R^7$ is selected from $OCH_3$ and $OC_2H_5$, and $R^8$ is tert-butyl.

In a preferred embodiment the transition metal compound is rac-methyl(cyclohexyl)silanediyl bis(2-methyl-4-(4-tert-butylphenyl)indenyl)zirconium dichloride.

In a second preferred embodiment, the transition metal compound is rac-dimethylsilanediyl bis(2-methyl-4-phenyl-1,5,6,7-tetrahydro-s-indacen-1-yl)zirconium dichloride.

In a third preferred embodiment, the transition metal compound is rac-dimethylsilanediyl bis(2-methyl-4-phenyl-5-methoxy-6-tert-butylindenyl)zirconium dichloride.

As a further requirement the solid single site catalyst system according to this invention must comprise a cocatalyst (Co) comprising an element (E) of group 13 of the periodic table (IUPAC), for instance the cocatalyst (Co) comprises a compound of Al.

Examples of such cocatalyst (Co) are organo aluminium compounds, such as aluminoxane compounds.

Such compounds of Al, preferably aluminoxanes, can be used as the only compound in the cocatalyst (Co) or together with other cocatalyst compound(s). Thus besides or in addition to the compounds of Al, i.e. the aluminoxanes, other cation complex forming cocatalyst compounds, like boron compounds can be used. Said cocatalysts are commercially available or can be prepared according to the prior art literature. Preferably however in the manufacture of the solid catalyst system only compounds of Al as cocatalyst (Co) are employed.

In particular preferred cocatalysts (Co) are the aluminoxanes, in particular the $C_1$ to $C_{10}$-alkylaluminoxanes, most particularly methylaluminoxane (MAO).

Preferably, the organo-zirconium compound of formula (I) and the cocatalyst (Co) of the solid single site catalyst system represent at least 70 wt%, more preferably at least 80 wt%, even more preferably at least 90 wt%, even further preferably at least 95 wt% of the solid catalyst system.

Thus it is appreciated that the solid single site catalyst system is featured by the fact that it is self-supported, i.e. it does not comprise any catalytically inert support material, like for instance silica, alumina or $MgCl_2$ or porous polymeric material, which is otherwise commonly used in heterogeneous catalyst systems, i.e. the catalyst is not supported on external support or carrier material. As a consequence of that the solid single site catalyst system is self-supported and it has a rather low surface area.

In one embodiment the solid single site catalyst system is obtained by the emulsion/solidification technology, the basic principles of which are described in WO 03/051934.

Hence the solid single site catalyst system is preferably in the form of solid catalyst particles, obtainable by a process comprising the steps of

a) preparing a solution of one or more catalyst components;
b) dispersing said solution in a second solvent to form an emulsion in which said one or more catalyst components are present in the droplets of the dispersed phase,
c) solidifying said dispersed phase to convert said droplets to solid particles and optionally recovering said particles to obtain said catalyst.

Preferably a first solvent, more preferably a first organic solvent, is used to form said solution. Still more preferably the organic solvent is selected from the group consisting of a linear alkane, cyclic alkane, aromatic hydrocarbon and halogen-containing hydrocarbon.

Moreover the second solvent forming the continuous phase is an inert solvent towards to catalyst components. The second solvent might be immiscible towards the solution of the catalyst components at least under the conditions (like temperature) during the dispersing step. The term "immiscible with the catalyst solution" means that the second solvent (continuous phase) is fully immiscible or partly immiscible i.e. not fully miscible with the dispersed phase solution.

Preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$-perfluoroalkanes, -alkenes or -cycloalkanes, more preferred $C_4$-$C_{10}$-perfluoro-alkanes, -alkenes or -cycloalkanes, particularly preferred perfluorohexane, perfluoroheptane, perfluorooctane or perfluoro (methylcyclohexane) or perfluoro (1,3- dimethylcyclohexane) or a mixture thereof. Furthermore it is preferred that the emulsion comprising said continuous phase and said dispersed phase is a bi-or multiphasic system as known in the art. An emulsifier may be used for forming and stabilising the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_{1-}C_n$ (suitably $C_4$-$C_{30}$ or $C_5$-$C_{15}$) alcohol (e.g. highly fluorinated heptanol, octanol or nonanol), oxide (e.g. propenoxide) or acrylate ester which reacts e.g. with a cocatalyst component, such as aluminoxane to form the "actual" surfactant.

In principle any solidification method can be used for forming the solid particles from the dispersed droplets. According to one preferable embodiment the solidification is effected by a temperature change treatment. Hence the emulsion subjected to gradual temperature change of up to 10 °C/min, preferably 0.5 to 6 °C/min and more preferably 1 to 5 °C/min. Even more preferred the emulsion is subjected to a temperature change of more than 40 °C, preferably more than 50 °C within less than 10 seconds, preferably less than 6 seconds.

For further details, embodiments and examples of the continuous and dispersed phase system, emulsion formation method, emulsifying agent and solidification methods reference is made e.g. to the above cited international patent application WO 03/051934.

All or part of the preparation steps can be done in a continuous manner. Reference is made to WO 2006/069733 describing principles of such a continuous or semi-continuous preparation methods of the solid catalyst types, prepared via emulsion/solidification method.

The above described catalyst components are prepared according to the methods described in WO 01/48034.

Optionally component (A) can be β-nucleated before blending with component (B).

The second mandatory component of the polypropylene blend composition can be any propylene homo- or copolymer which is suitable for improving the extrudability of component (A) by broadening the molecular weight distribution in terms or polydispersity index PI of the whole composition.

Thus component (B) can be a propylene homopolymer (B-h) or copolymer (B-c), which can be produced with any suitable Ziegler-Natta catalyst or single-site catalyst known in the state of the art.

The $MFR_2$ of component (B) can vary in a broader range than for component (A). Thus the $MFR_2$ can be from 0.03 up to 20 g/10min preferably up to 15 g/10min, more preferably up to 10 g/10min.

It only has to be taken into account that by adding component (B) to component (A) the overall $MFR_2$ of the blend as defined below should be within the desired ranges in order to achieve the desired properties of the blend. Thus the $MFR_2$ of component (B) depends also on the amount of added component (B) and the desired final $MFR_2$ of the blend.

If a copolymer (B-c) is used as second component, this polypropylene copolymer is a copolymer which contains 90.0 to 99.8 wt%, preferably 93.0 to 99.5 wt%, more preferably 95.0 to 99.0 wt% of propylene and 0.2 to 10 wt%, preferably 0.5 to 7.0 wt%, more preferably 1.0 to 5.0 wt% of one or more of ethylene or a $C_4$-$C_8$ $\alpha$-olefins.

The $C_4$-$C_8$-$\alpha$-olefin is preferably selected from 1-butene, 1-pentene, 1-hexene, 4-methyl-1-pentene and 1-octene. Particularly preferred is 1-butene or 1-hexene.

Thus preferred comonomers are ethylene, 1-butene and 1-hexene or mixtures therefrom. However, it is more preferred that the propylene copolymer does not comprise further comonomer(s), e.g. 1-hexene or 1-butene or ethylene is the only comonomer of the propylene copolymer (binary propylene-hexene or propylene-butene or propylene-ethylene copolymer).

The binary propylene-ethylene copolymer is particularly preferred.

Optionally component (B) can be [$\beta$-nucleated before blending with component (A).

The amount of component (B) in the polymer blend of the present invention can be from 3 wt% to 49 wt%, based on the sum of component (A) and (B) being 100 wt%, preferably from 5 wt% to 30 wt%, based on the sum of component (A) and (B) being 100 wt% and more preferably from 7 wt% to 20 wt%, based on the sum of component (A) and (B) being 100 wt%; thus component (A) being present in the blend from 51 wt% to 97 wt% based on the sum of component (A) and (B) being 100 wt%, preferably from 70 wt% to 95 wt%, based on the sum of component (A) and (B) being 100 wt% and more preferably from 80 wt% to 93 wt%, based on the sum of component (A) and (B) being 100 wt%.

Preferably the polypropylene blend of the instant invention comprises the component (A) and component (B) substantially as the only polymer components of said blend, i.e. the blend may comprise further additives and in particular ($\beta$-nucleating agents but no further other polymer or only a small amount of further (third) polymer, i.e. only up to 2 wt%, preferably only up to 1.5 wt% based on the blend of component (A) and (B) of a further polymer. Thus the both polymer components, i.e. component (A) and component (B), represents together preferably at least 85 wt%, more preferably at least 90 wt%, still more preferably at least 95 wt%, yet more preferably at least 97 wt% up to 99 wt%, of the polypropylene blend, whereas the remaining part, i.e. preferably not more than 15 wt%, more preferably not more than 10 wt%, still more preferably not more than 5 wt%, yet more preferably not more than 3 wt%, like 1 wt% of the polypropylene blend represents non-polymer components, like $\beta$-nucleating agents and optionally further additives as usual in the art, like i.a. fillers, antioxidants, stabilizers, acid scavengers, processing aids, antistatic agents, antiblocking agents, pigments and reinforcing agents not interacting with the beta-nucleating agents and as stated above up to 2 wt%, preferably up to 1.5 wt% of a further polymer.

Thus the polypropylene blend of the instant invention preferably comprises

a) 85 to 99 wt% of a blend of component (A) and component (B)
b) 1 to 15 wt% of additives comprising

- $b_1$) 0 to $\leq$ 2 wt% of a third polymer
- $b_2$) 0.0001 to 2.0 wt% of at least one $\beta$-nucleating agent
- $b_3$) optionally one or more further additives usual in the art and not interacting with the beta-nucleating agents.

Such further, respectively third, polymer is typically introduced into the blend by using master-batches comprising i.a. the $\beta$-nucleating agent.
Therefore the further, respectively third polymer can be any polymer used in the art to prepare such master-batches.
The polypropylene blend is at least partially crystallized in the $\beta$-modification, i.e. it is preferred that the amount of $\beta$-modification of the polypropylene blend composition is at least 20 %, more preferably at least 50 %, still more preferably at least 60 % and most preferably at least 70 % up to 90 %, preferably up to 85 % (determined by DSC using the second heat as described in detail in the example section).

$\beta$-nucleation can be achieved by $\beta$-nucleating component (A) and/or component (B) before blending and/or by $\beta$-nucleating the blend comprising component (A) and (B) as described below.

The preferred $\beta$-nucleating agents are defined in more detail below where the process for the manufacture of the inventive polypropylene composition is described. The amount of $\beta$-nucleating agents is in the range of 0.0001 to 2.0 wt%, more preferably in the range of 0.005 to 0.5 wt%, based on the sum of component (A) and component (B).

Additionally the polypropylene blend has a $MFR_2$ (230 °C)in the range of 0.1 to 0.8 g/10min, more preferably 0.2 to 0.5 g/10min.

The molecular weight distribution (MWD) can be measured by SEC (also known as GPC), whereby it is expressed as Mw/Mn, or by a rheological measurement, like Polydispersity Index (PI) - measurement or Shear Thinning Index (SHI) - measurement. In the present case primarily the Polydispersity Index (PI) is used as measurement. All the

measurements are known in art and further defined below in the example section.

The final PP blend shall be suitable as pipe material. Thus the blend must comply with standards in this field. To achieve the requirements defined in the standards and on the other hand being economically processable it has been found that the blend should have a shear thinning index SHI (0/50) measured according to ISO 6271-10 (200°C) of at least 5, more preferably of at least 10, yet more preferably of at least 15. The shear thinning index SHI (0/50) measured according to ISO 6271-10 (200°C) can be up to 85, preferably up to 80 and more preferably up to 75.

The composition has a polydispersity index PI of at least 3.0, more preferably of at least 3.2, yet more preferably in the range of 3.0 to 8.0, still more preferably in the range of 3.2 to 5.0.

Additionally it is appreciated that the polypropylene blend enables to provide pipes with a rather high resistance to deformation, i.e. have a high stiffness. Accordingly it is preferred that the polypropylene blend in an injection molded state and/or the pipes based on said polypropylene blend has/have a flexural modulus measured according to ISO 178 of at least 800 MPa, preferably of at least 850MPa, more preferably of at least 900MPa and most preferably of at least 950 MPa.

Furthermore it is appreciated that the polypropylene composition enables to provide pipes having rather high impact strength. Accordingly it is preferred that the polypropylene composition in an injection molded state has an impact strength measured according the Charpy impact test (ISO 179 (1eA)) at 23 °C of at least 10.0 kJ/$m^2$, more preferably of at least 20.0 kJ/$m^2$, yet more preferably of at least 30.0 kJ/$m^2$ and/or an high impact strength measured according the Charpy impact test (ISO 179 (1eA)) at 0°C of at least 1.5 kJ/$m^2$ and more preferably of at least 2.0 kJ/$m^2$.

The instant polypropylene blend has been in particular developed to improve the properties of pipes, in particular in terms of very good creep performance by keeping the other properties, like resistance to deformation and impact strength, on a high level. Thus the instant invention is also directed to the use of the instant polypropylene blend as part of a pipe, like a pressure pipe, and for the manufacture of pipes. In addition it is appreciated that polypropylene blend enables to provide pipes having a very good creep performance.

Thus it is preferred that the polypropylene blend and/or the pipes, respectively, based on the polypropylene blend has/have a pressure test performance measured according ISO 1167:

a) for homopolymer blends (21 MPa and 20°C, pipe diameter 32 mm; wall thickness 3 mm) of at least 25 h, more preferably of at least 30 h and (3.5 MPa and 95°C, pipe diameter 32 mm; wall thickness 3 mm) of at least 7000 h and
b) for copolymer blends (16 MPa and 20°C, pipe diameter 32 mm; wall thickness 3 mm) of at least 8000 h, more preferably of at least 10000 h and (4.2 MPa and 95°C, pipe diameter 32 mm; wall thickness 3 mm) of at least 5000 h, more preferably of at least 5800 h.

The term "pipe" as used herein is meant to encompass hollow articles having a length geater than diameter. Moreover the term "pipe" shall also encompass supplementary parts like fittings, valves and all parts which are commonly necessary for e.g. a hot water piping system.

Pipes according to the invention also encompass single layer pipes and multilayer pipes, where for example one layer comprises the inventive polypropylene blend and one or more further layers are metal layers, adhesive layers, or other layers usual in the art.

As described above, either component (A) and/or component (B) and/or the polypropylene blend is β-nucleated. As β-nucleating agent any nucleating agent can be used which is suitable for inducing crystallization of polypropylene homo- and copolymers in the hexagonal or pseudo-hexagonal modification. Mixtures of such nucleating agents may also be employed.

Suitable types of β-nucleating agents are:

(1) dicarboxylic acid derivative type diamide compounds from $C_5$-$C_B$-cycloalkyl monoamines or $C_6$-$C_{l2}$-aromatic monoamines and $C_5$-$C_8$-aliphatic, $C_5$-$C_8$-cycloaliphatic or $C_6$-$C_{12}$-aromatic dicarboxylic acids, e. g.

- N,N'-di-$C_5$-$C_8$-cycloalkyl-2,6-naphthalene dicarboxamide compounds such as N,N'-dicyclohexyl-2,6-naphthalene dicarboxamide and N,N'-dicyclooctyl-2,6-naphthalene dicarboxamide,
- N,N'-di-$C_5$-$C_8$-cycloalkyl-4,4-biphenyldicarboxamide compounds such as N,N'-dicyclohexyl-4,4-biphenyldicarboxamide and N,N'-dicyclopentyl-4,4-biphenyldicarboxamide,
- N,N'-di-$C_5$-$C_8$-cycloalkyl-terephthalamide compounds such as N,N'-dicyclohexylterephthalamide and N,N'-dicyclopentylterephthalamide,
- N,N'-di-$C_5$-$C_8$-cycloalkyl-1,4-cyclohexanedicarboxamide compounds such as N,N'-dicyclo-hexyl-1,4-cyclohexanedicarboxamide and N, N'-dicyclohexyl-1,4-cyclopentanedicarboxamide,

(2) diamine derivative type diamide compounds from $C_5$-$C_8$-cycloalkyl monocarboxylic acids or $C_6$-$C_{,2}$-aromatic monocarboxylic acids and $C_5$-$C_8$-cycloaliphatic or $C_6$-$C_{12}$-aromatic diamines, e. g.

- N,N'-$C_6$-$C_{10}$-arylene-bis-benzamide compounds such as N,N'-p-phenylene-bisbenzamide and N,N'-1,5-naphthalene-bis-benzamide,
- N,N'-$C_5$-$C_8$-cycloalkyl-bis-benzamide compounds such as N,N'-1,4-cyclopentanebisbenzamide and N,N'-1,4-cyclohexane-bis-benzamide,
- N,N'-p-$C_6$-$C_{12}$-arylene-bis-$C_5$-$C_8$-cycloalkylcarboxamide compounds such as N,N'-1,5-naphthalene-bis-cyclohexanecarboxamide and N,N'-1,4-phenylene-bis-cyclohexanecarboxamide, and
- N,N'-$C_5$-$C_8$-cycloalkyl-bis-cyclohexanecarboxamide compounds such as N,N'-1,4-cyclopentane-bis-cyclohexanecarboxamide and N,N'-1,4-cyclohexane-bis-cyclohexanecarboxamide,

(3) amino acid derivative type diamide compounds from amidation reaction of $C_5$-$C_8$-alkyl, $C_5$-$C_8$-cycloalkyl-or $C_6$-$C_{12}$-arylamino acids,$C_5$-$C_8$-alkyl-, $C_5$-$C_8$-cycloalkyl- or $C_6$-$C_{12}$-aromatic monocarboxylic acid chlorides and $C_5$-$C_8$-alkyl-, $C_5$-$C_8$-cycloalkyl-or $C_6$-$C_{12}$-aromatic mono-amines, e.g.

- N-phenyl-5-(N-benzoylamino)pentaneamide and N-cyclohexyl-4-(N-cyclohexylcarbonylamino)benzamide.

Further suitable of β-nucleating agents are

(4) quinacridone type compounds, e.g. quinacridone, dimethylquinacridone and dimethoxyquinacridone,
(5) quinacridonequinone type compounds, e. g. quinacridonequinone, a mixed crystal of 5,12-dihydro(2,3b)acridine-7,14-dione with quino(2,3b)acridine-6,7,13,14-(5H, 12H)-tetrone and dimethoxyquinacridonequinone and
(6) dihydroquinacridone type compounds, e. g. dihydroquinacridone, dimethoxydihydroquinacridone and dibenzodihydroquinacridone.

Still further suitable β-nucleating agents are

(7) dicarboxylic acid salts of metals from group IIa of periodic system, e. g. pimelic acid calcium salt and suberic acid calcium salt; and
(8) mixtures of dicarboxylic acids and salts of metals from group IIa of periodic system.

Still further suitable β-nucleating agents are

(9) salts of metals from group IIa of periodic system and imido acids of the formula

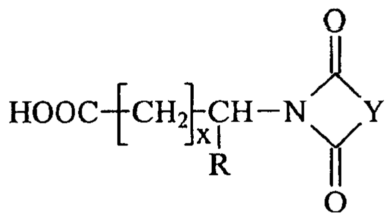

wherein x = 1 to 4; R is selected from H, -COOH, $C_1$-$C_{12}$-alkyl, $C_5$-$C_8$-cycloalkyl or $C_6$-$C_{12}$-aryl, and Y is selected from $C_1$-$C_{12}$-alkyl, $C_5$-$C_8$-cycloalkyl or $C_6$-$C_{12}$-aryl-substituted bivalent $C_6$-$C_{12}$-aromatic residues, e. g. calcium salts of phthaloylglycine, hexahydrophthaloylglycine, N-phthaloylalanine and/or N-4-methylphthaloylglycine.

Preferred β-nucleating agents are any one or mixtures of N, N'-dicyclohexyl-2, 6-naphthalene dicarboxamide, quinacridone type or pimelic acid calcium-salt (EP 0 682 066 To achieve β-nucleation it is possible that

a) after the polymerization the propylene component (A), component (A) is first melt blended with component (B) to yield a polymer blend, which is then blended with the β-nucleating agent as defined above to obtain the polypropylene blend according to the invention; or
b) propylene component (A) is first blended with the β-nucleating agent as defined above and then with an optionally also β-nucleated second component (B), whereupon further β-nucleating agents may be added to the blend.

The blending of component (A) with component (B) can be carried out by methods known per se, e.g. by mixing component (A) with the β-nucleating agent and then mixing with an optionally β-nucleated component (B) and optionally mixing the blend with a β-nucleating agent or by mixing component (A) with an optionally β-nucleated component (B) and then mixing the blend with a β-nucleating agent in the desired weight relationship using a batch or a continuous

process.

As examples of typical batch mixers the Banbury and the heated roll mill can be mentioned. Continuous mixers are exemplified by the Farrel mixer, the Buss co-kneader, and single- or twin-screw extruders, preferably a co-rotating or counter-rotating twin screw extruder is used. It is also possible to use a single screw extruder such as the Buss Co-kneader, i.e. a single screw mixer with a downstream discharge single screw extruder including a pelletising unit. Static mixers such as Kenics, Koch, can also be used.

In case pipes shall be produced of the inventive polypropylene blend then after the manufacture of the inventive polypropylene blend the following steps follow. In general the inventive polypropylene blend is extruded and subsequently formed into a pipe or surrounds a conductor or several conductors.

Accordingly the inventive pipe is preferably produced by first plasticizing the polypropylene blend of the instant invention in an extruder at temperatures in the range of from 200 to 300 °C and then extruding it through anannular die and cooling it.

The extruders for producing the pipe can be single screw extruders with an L/D of 20 to 40 or twin screw extruders or extruder cascades of homogenizing extruders (single screw or twin screw). Optionally, a melt pump and/or a static mixer can be used additionally between the extruder and the ring die head. Ring shaped dies with diameters ranging from approximately 16 to 2000 mm and even greater are possible.

The melt arriving from the extruder is first distributed over an annular cross-section via conically arranged holes and then fed to the core/die combination via a coil distributor or screen. If necessary, restrictor rings or other structural elements for ensuring uniform melt flow may additionally be installed before the die outlet. After leaving the annular die, the pipe is taken off over a calibrating mandrel, usually accompanied by cooling of the pipe by air cooling and/or water cooling, optionally also with inner water cooling.

The present invention will now be described in further detail by the examples provided below.

EXAMPLES

1. Definitions/Measuring Methods

The following definitions of terms and determination methods apply for the above general description of the invention as well as to the below examples unless otherwise defined.

Rheology: Dynamic rheological measurements were carried out with Rheometrics RDA-II QC on compression molded samples under nitrogen atmosphere at 200°C using 25 mm - diameter plate and plate geometry. The oscillatory shear experiments were done within the linear viscoelastic range of strain at frequencies from 0.01 to 500 rad/s. (IS06721-1) The values of storage modulus (G'), loss modulus (G"), complex modulus (G*) and complex viscosity (h*) were obtained as a function of frequency (w).

The Zero shear viscosity (h0) was calculated using complex fluidity defined as the reciprocal of complex viscosity.

Its real and imaginary part are thus defined by

$$f'(\omega) = \eta'(\omega) / [\eta'(\omega)^2 + \eta''(\omega)^2]$$

and

$$f''(\omega) = \eta''(\omega) / [\eta'(\omega)^2 + \eta''(\omega)^2]$$

From the following equations

$$\eta' = G'' / \omega \quad \text{and} \quad \eta'' = G' / \omega$$

$$f'(\omega) = G''(\omega) \cdot \omega / [G'(\omega)^2 + G''(\omega)^2]$$

$$f''(\omega) = G'(\omega) \cdot \omega / [G'(\omega)^2 + G''(\omega)^2]$$

The polydispercity index, PI, is calculated from cross-over point of G' (w) and G"(w). There is a linear correlation

between f' and f' with zero ordinate value of 1 /h0 (Heino et al. 1) For polypropylene this is valid at low frequencies and five first points (5 points/decade) are used in calculation of h0.

Shear thinning indexes (SHI), which are correlating with MWD and are independent of MW, were calculated according to Heino 1,2) (below).

SHI is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.

1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362

2) The influence of molecular structure on some rheological properties of polyethylene. Heino, Eeva-Leena. BorealisPolymers Oy, Porvoo, Finland. Annual Transactions of the Nordic Rheology Society, 1995

$MFR_2$ is measured according to ISO 1133 (230°C, 2.16 kg load). The melt flow rate is that quantity of polymer in grams which the test apparatus standardized to ISO 1133 extrudes within 10 minutes at a temperature of 230°C under a load of 2.16kg.

Comonomer content of $C_2$ and $C_6$ is measured with Fourier transform infrared spectroscopy (FTIR) with Perkin Elmer FTIR 1600 spectrometer calibrated with $^{13}$C-NMR. Thin films were pressed to a thickness of between 250 to 500 μm at 190°C and spectra recorded in transmission mode. Relevant instrument settings include a spectral window of 5000 to 400 wave-numbers ($cm^{-1}$), a resolution of 2.0 $cm^{-1}$ and 8 scans.

The hexene content of the propylene-hexene copolymers was determined using the baseline corrected peak maxima of a quantitative band at 727 $cm^{-1}$, with the baseline defined from 758.5 to 703.0 $cm^{-1}$.

The comonomer content C was determined using a film thickness method using the intensity of the quantitative band I(q) and the thickness of the pressed film T using the following relationship: [I(q)/T]m+c = C; where m and c are the coefficients determined from the calibration curve constructed using the comonomer contens obtained from $^{13}$C-NMR spectroscopy.

**Content of β-modification:** The ß-crystallinity is determined by Differential Scanning Calorimetry (DSC). DSC is run according to ISO 3146/ part 3 /method C2 with a scan rate of 10 °C/min. The amount of ß-modification is calculated from the second heat by the following formula:

$$\text{ß-area}/(\alpha\text{-area} + \text{ß-area})$$

Since the thermodynamical ß-modification starts to be changed into the more stable alpha-modification at temperatures above 150 °C, a part of the ß-modification is transferred within the heating process of DSC-measurement. Therefore, the amount of ß-pp determined by DSC is lower as when measured according to the method of Turner-Jones by WAXS (A. Turner-Jones et. al., Makromol. Chem 75 (1964) 134).

"Second heat" means that the sample is heated according to ISO 3146 / part 3 / method C2 for a first time and then cooled to room temperature at a rate of 10 °C/min. The sample is then heated a second time, also according to ISO 3146 / part 3 / method C2. This second heat is relevant for measurement and calculation.

During the "first heat" all thermal history of the sample giving rise to different crystalline structure, which typically comes from different processing conditions and/or methods, is destroyed. Using the second heat for determination of ß-crystallinity, it is possible to compare samples regardless of the way the samples were originally manufactured.

**Melting temperature $T_m$, crystallization temperature $T_c$,** is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

**Tensile strength** was measured according to ISO 527 for injection molded articles. Crosshead speed for testing the modulus was 1 mm/min.

Crosshead speed for testing the tensile strength and elongations was 50 mm/min.

Test specimen produced as described in EN ISO 1873-2 (the produced test specimens were multipurpose test specimen of type A according to ISO 3167).

**Flexural modulus** is measured according to ISO 178.

The flexural modulus is measured on samples prepared from injection molded specimens as described in EN ISO 1873-2 (80 x 10 x 4 mm)

**Charpy impact test:** The charpy notched impact strength (Charpy NIS) is measured according to ISO 179 1eA at 23 °C and 0 °C respectively. For the preparation of the injection molded test specimens see "flexural modulus".

The test specimens for the tensile, flexural and Charpy measurements were injection moulded using a machine Engel V60 Tech with a 22 mm screw at 255°C at a pressure of 50 bar and post-pressure of 55 bar. The testing was done after 96 hours storage at 23 °C.

**Pressure test performance** is measured according to ISO 1167. In this test, a specimen is exposed to constant circumferential (hoop) stress of 16 MPa (for PP copolymers) respectively 21 MPa (for PP homopolymers) at elevated temperature of 20 °C in water-in-water or 4.2 MPa (for PP copolymers) respectively 3.5 MPa (for PP homopolymers) at a temperature of 95 °C in water-in-water. The time in hours to failure is recorded. The tests were performed on pipes produced on a conventional pipe extrusion equipment, the pipes having a diameter of 32 mm and a wall thickness of 3 mm.

Porosity: BET with $N_2$ gas, ASTM 4641, apparatus Micromeritics Tristar 3000; sample preparation: at a temperature of 50 °C, 6 hours in vacuum.

Surface area: BET with $N_2$ gas ASTM D 3663, apparatus Micromeritics Tristar 3000: sample preparation at a temperature of 50 °C, 6 hours in vacuum.

## B. Examples

### Examples 1 and 2

The catalyst used in the polymerization process was a metallocene catalyst as produced in example 1 of EP 1 741 725 A1 based on *rac*-cyclohexyl(methyl)silanediylbis[2-methyl-4-(4'-*tert*-butylphenyl)indenyl]zirconium dichloride.

The mean particle size of the powder was measured by Coulter counter to be 20 μm. Porosity and surface area were both below the measurement limit.

Al content 36,27 wt-%

Zr content 0,42 wt-%

Al/Zr mol/mol ratio 291 mol/mol

One homopolymer as component (A) and one homopolymer as component (B) have been produced in a Borstar PP pilot plant with a prepolymerization and a loop reactor

Table 1:

| | Component (A) | component (B) |
|---|---|---|
| Prepolymerization | | |
| Temperature [°C] | 37 | 40 |
| Pressure [kPa] | 5138 | 5331 |
| Hydrogen feed [g/h] | 0.19 | 0.40 |
| Residence time [h] | 0,42 | 0,46 |
| Catalyst feed [g/h] | 3,38 | 3,34 |
| Loop | | |
| Temperature [°C] | 70 | 70 |
| Pressure [kPa] | 5068 | 5236 |
| Residence time [h] | 0.65 | 0.73 |
| $H_2/C_3$-ratio [mol/kmol] | 0.03 | 0.15 |

Polymers were formulated with Irganox B215: 1500 ppm and calcium stearate: 500 ppm

As a second component (B) a Ziegler-Natta based commercial grade HD601CF (propylene homopolymer) from Borealis was used.

The properties of the blend components are shown in Table 2:

Table 2:

| | Component (A) | Component (B) | HD601CF |
|---|---|---|---|
| $MFR_2$ [g/10 min] | 0.4 | 7.3 | 7 |
| Rheology at 200°C | | | |

(continued)

| | Component (A) | Component (B) | HD601CF |
|---|---|---|---|
| SHI (0/50) | 25.1 | 3.28 | 10.4 |
| PI [$Pa^{-1}$] | 2.88 | 2.27 | 4.07 |
| | | | |
| $T_{cr}$ [°C] | 109 | 117 | 119 |
| $T_m$ [°C] | 154 | 156 | 161 |

90 wt% Component (A) was blended with 10 wt% of Component (B) (Example 1) or HD601CF (Example 2) (giving 100% blend) and the blend was β-nucleated with 2 wt%, based on the blend, CMB250 grey 7042 from Mastertec GmbH (masterbatch with ß-nucleating agent) using a 2-screw extruder ZSK 40. CMB250 grey 7042 contains the following compounds:

48.95 wt.-% RE 216 CF (CAS-no 9010-79-1) [random copolymer of Borealis]
47.0 wt.-% P. White 7 (CAS-no 1314-98-3)
0.5 wt.-% P. Black 7 (CAS-no 1333-86-4)
2.0 wt.-% P. Green 17 (CAS-no 1308-38-9)
1.3 wt.-% P. Blue 28 (CAS-no 1345-16-0)
0.25 wt.-% P. Orange 48 (CAS-no 1503-48-6)

Pipes with a diameter of 32mm and a wall thickness of 3mm were extruded on a Battenfeld 1- 45 - 30 B with following temperature settings: Temperature of the Cylinder Zones and Die Head kept constant.

| | |
|---|---|
| Cylinder zone 1 | 180°C |
| Cylinder Zone 2 | 190°C |
| Cylinder Zone 3 | 210°C |
| Cylinder Zone 4 | 210°C |
| Pipe head zones | 195°C |
| Die | 210°C |

The blend and pipe properties are summarized and compared with Beta-PP BE60-7032 and BE50; which are commercial available ZN homopolymer based pipe grades of Borealis; in table 3.

Table 3:

| | Comparative Example 1 | Inventive Example 2 | Reference Example BE60-7032 | Reference Example BE50 |
|---|---|---|---|---|
| $MFR_2$ [g/10 min] | 0.5 | 0.48 | 0.3 | 0.3 |
| Rheology at 200°C | | | | |
| SHI (0/50) | 22.2 | 23.7 | 8 | 8 |
| PI [$Pa^{-1}$] | 3.39 | 3.57 | 3.6 | 3.6 |
| | | | | |
| $T_{cr}$ [°C] | 118 | 118 | 122 | 118 |
| $T_m$ [°C] | 143/156 | 146/158 | 153/168 | 167 |
| | | | | |
| Flexural Modulus [MPa] | 1280 | 1290 | 1230 | 1534 |

(continued)

| | Comparative Example 1 | Inventive Example 2 | Reference Example BE60-7032 | Reference Example BE50 |
|---|---|---|---|---|
| Charpy, notched; 23°C [$kJ/m^2$] | 38.7 | 44.9 | 72.3 | 8.5 |
| Charpy, notched; 0°C [$kJ/m^2$] | 4.9 | 5.2 | 5.8 | 2.1 |
| Pipe Extrusion parameters | | | | |
| Melt pressure [Bar] | 89 | 102 | 138 | 145 |
| Melt Temperature [°C] | 219 | 217 | 214 | 213 |
| Screw speed [rpm] | 50 | 51 | 44 | 38 |
| SEI[kWh/kg] | 0.78 | 0.75 | 1.04 | 1.07 |
| Line speed [m/min] | 2.6 | 2.5 | 2.0 | 2.0 |
| Output [kg/h] | 38 | 39 | 30 | 30 |
| Pipe pressure test | | | | |
| 21 MPa, at 20°C [h] | 30 | 92 | 20 | 380 |
| 3.5 MPa, at 95°C [h] | 7040 Interrupted | 7048 interrupted | 7000 | 1993 |
| SEI specific energy input | | | | |

As can be seen from table 3 the pipes produced from blends containing the SSC-based polymer component (A) show improved processability (lower pressure needed and therefore lower energy consumption for pipe extrusion) and on the same time improved pressure performance in the pressure test compared to reference grades BE60-7032 and BE50.

**Example 3**

A propylene-hexene random copolymer ($C_3/C_6$-r-PP) has been produced in a Borstar PP pilot plant with a prepolymerisation, a loop reactor and one gas phase reactor.

Table 4:

| | **($C_3/C_6$-r-PP)** |
|---|---|
| Prepolymerization | |
| Temperature [°C] | 35 |
| Pressure [kPa] | 5083 |
| Hydrogen feed [g/h] | 0.5 |
| Residence time [h] | 0.32 |
| Catalyst feed [g/h] | 3.88 |
| Loop | |
| Temperature [°C] | 65 |
| Pressure [kPa] | 5272 |
| Residence time [h] | 0.31 |
| $H_2/C_3$-ratio [mol/kmol] | 0.07 |
| Split [%] | 27 |

(continued)

| | **($C_3/C_6$-r-PP)** |
|---|---|
| $MFR_2$ [g/10 min] | 0.8 |
| Gas Phase Reactor | |
| Temperature [°C] | 85 |
| Pressure [kPa] | 3000 |
| Residence time [h] | 2.37 |
| $H_2/C_3$-ratio [mol/kmol] | 0.33 |
| $C_6/C_3$-ratio [mol/kmol] | 1.14 |
| Split [%] | 73 |

Polymer was formulated with: Irganox 168: 1000 ppm; Irganox 1010: 500 ppm; Syloblock®45 (Antiblocking aid; from Grace Davison): 1000 ppm; calcium stearate: 200 ppm; SHT (Hydrotalcite; acid scavanger): 200 ppm and 2 wt% CMB250 grey 7042.

Pipe extrusion of the beta-nucleated propylene-hexene random copolymer has been tried, but without success. It was not possible to produce pipes with acceptable quality.

In order to improve extrudability 10 wt% of Beta-PPR™ RA7050 was melt blended with 90 wt% of the non-nucleated propylene-hexene random copolymer and the blend was β-nucleated with 2 wt%, based on the blend, CMB250 grey 7042 from Mastertec GmbH (masterbatch with ß-nucleating agent) using a 2-screw extruder ZSK 40.

Beta-PPR™ RA7050 is a commercially available beta-nucleated polypropylene random copolymer with ethylene from Borealis.

The properties of the non-nucleated and the beta-nucleated propylene-hexene random copolymer are shown in Table 5:

Table 5:

| | Non-nucleated $C_3/C_6$-r-PP | β-nucleated $C_3/C_6$-r-PP |
|---|---|---|
| $MFR_2$ [g/10 min] | 0.42 | 0.4 |
| $C_6$-content [wt%] | 0.6 | 0.6 |
| Rheology at 200°C | | |
| SHI (0/50] | 78.2 | 73.5 |
| PI [$Pa^{-1}$] | 3.71 | 3.58 |
| | | |
| $T_{Cr}$[°C] | 109 | 112 |
| $T_m$ [°C] | 146 | 135/147 |
| | | |
| Flexural Modulus [MPa] | 1210 | 1100 |
| Charpy, notched; 23°C [kJ/$m^2$] | 6.0 | 40.6 |
| Charpy, notched; 0°C [kJ/$m^2$] | 1.8 | 2.0 |

Beta-PPR™ RA7050 was also used as comparative example. Furthermore RA130E, a polypropylene random copolymer commercially available from Borealis has been used as comparative example.

Pipes with a diameter of 32mm and a wall thickness of 3mm were extruded on a Battenfeld 1- 45 - 30 B with following temperature settings. Temperature of the Cylinder Zones and Die Head kept constant.

| | |
|---|---|
| Cylinder zone 1 | 180°C |
| Cylinder Zone 2 | 190°C |

(continued)

| | |
|---|---|
| Cylinder Zone 3 | 210°C |
| Cylinder Zone 4 | 210°C |
| Pipe head zones | 195°C |
| Die | 210°C |

The properties of the blend, of Beta-PPR™ RA7050 and of RA130E and of pipes produced therefrom are summarized in Table 6.

Table 6:

| | Inventive Example 3 - blend | Reference Example RA7050 | Reference Example RA130E |
|---|---|---|---|
| $MFR_2$ [g/10 min] | 0.38 | 0.3 | 0.3 |
| Rheology at 200°C | | | |
| SHI (0/50) | 74.8 | 9.6 | 9.6 |
| PI [$Pa^{-1}$] | 3.83 | 3.97 | 3.97 |
| | | | |
| $T_{Cr}$[°C] | 114 | 108 | 102 |
| $T_m$[°C] | 135/147 | 134/148 | 143 |
| | | | |
| Flexural Modulus [MPa] | 1090 | 909 | 860 |
| Charpy, notched; 23°C [kJ/$m^2$] | 31.4 | 86 | 17.5 |
| Charpy, notched; 0°C [kJ/$m^2$] | 2.0 | 8.3 | 3.5 |
| Pipe Extrusion parameters | | | |
| Melt pressure [Bar] | 100 | 132 | 129 |
| Melt Temperature [°C] | 222 | 215 | 221 |
| Screw speed [rpm] | 44 | 48 | 49 |
| SEI[kWh/kg] | 0.77 | 0.85 | 0.81 |
| Line speed [m/min] | 2.0 | 2.0 | 2.0 |
| Output [kg/h] | 30 | 30 | 30 |
| Pipe pressure test | | | |
| 16 MPa, at 20°C [h] | > 10000 On-going | 167 | 25 |
| 4.2 MPa, at 95°C [h] | > 5800 On-going | 5750 | 2170 |

From Table 6 compared to Table 5 it can be seen that the polydispersity index PI was increased, which markedly improved extrudability and enabled pipe production. Furthermore it can be seen that pipes produced form the inventive blend show a markedly improved pressure performance in the pressure test compared to reference grades.

## Claims

**1.** Polypropylene blend for pipe production having
a shear thinning index SHI (0/50) measured according to ISO 6271-10 of at least 5;
a polydispersity index PI of at least 3.0; and

an $MFR_2$ (230°C) of 0.1 to 0.8 g/10min measured according to ISO 1133 the blend comprising

(a) component (A) being a propylene homo- or copolymer produced in a polymerization process in the presence of a single site catalyst system
comprising a transition metal compound of the formula (I)

$$Rn(Cp')2MX2 \qquad (I)$$

wherein

"M" is zirconium or hafnium,
each "X" is independently a monovalent anionic σ-ligand,
each "Cp'" is a cyclopentadienyl-type organic ligand independently selected from the group consisting of substituted cyclopentadienyl, substituted indenyl, substituted tetrahydroindenyl, and substituted or unsubstituted fluorenyl, said organic ligands coordinate to the transition metal (M),
"R" is a bivalent bridging group linking said organic ligands (Cp'),
"n" is 1 or 2,
and

(b) component (B) being a second propylene homo- or copolymer made with a Ziegler-Natta catalyst, which broadens the molecular weight distribution in terms of polydispersity index of the whole composition,

wherein either component (A) and/or component (B) and/or the polypropylene blend is/are β-nucleated.

**2.** Polypropylene blend according to claim 1, wherein component (A) has an $MFR_2$ (230°C) of not more than 5.0 g/10min measured according to ISO 1133.

**3.** Polypropylene blend according to claim 1 or 2, wherein component (A) has been produced in the presence of the single site catalyst system
wherein
"n" is 1,
optionally in combination with a cocatalyst (Co) comprising an element (E) of group 13 of the periodic table (IUPAC).

**4.** Polypropylene blend according to claim 3, wherein the transition metal compound has the formula (II)

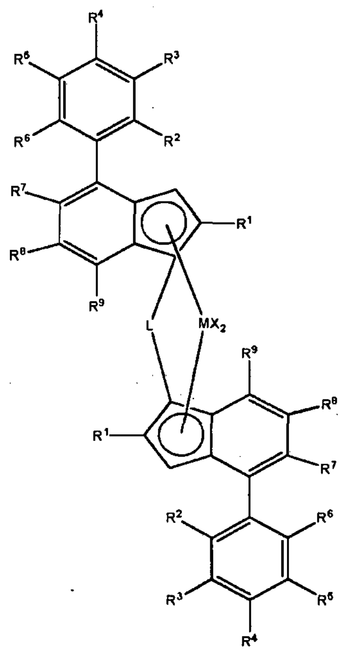

wherein

M is zirconium or hafnium,
X are ligands with a $\sigma$-bond to the metal "M", as defined for formula (I),
$R^1$ are equal to or different from each other, and are selected from the group consisting of linear saturated $C_1$ to $C_{20}$ alkyl, linear unsaturated $C_1$ to $C_{20}$ alkyl, branched saturated $C_1$-$C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl, and $C_7$ to $C_{20}$ arylalkyl, optionally containing one or more heteroatoms of groups 14 to 16 of the Periodic Table (IUPAC),
$R^2$ to $R^6$ are equal to or different from each other and are selected from the group consisting of hydrogen, linear saturated $C_1$-$C_{20}$ alkyl, linear unsaturated $C_1$-$C_{20}$ alkyl, branched saturated $C_1$-$C_{20}$ alkyl, branched unsaturated $C_1$-$C_{20}$ alkyl, $C_3$-$C_{20}$ cycloalkyl, $C_6$-$C_{20}$ aryl, $C_7$-$C_{20}$ alkylaryl, and $C_7$-$C_{20}$ arylalkyl, optionally containing one or more heteroatoms of groups 14 to 16 of the Periodic Table (IUPAC),
$R^7$ and $R^8$ are equal to or different from each other and selected from the group consisting of hydrogen, linear saturated $C_1$ to $C_{20}$ alkyl, linear unsaturated $C_1$ to $C_{20}$ alkyl, branched saturated $C_1$ to $C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl, $C_7$ to $C_{20}$ arylalkyl, optionally containing one or more heteroatoms of groups 14 to 16 of the Periodic Table (IUPAC), $SiR^{10}_3$, $GeR^{10}_3$, $OR^{10}$, $SR^{10}$ and $NR^{10}_2$,
wherein
$R^{10}$ is selected from the group consisting of linear saturated $C_1$-$C_{20}$ alkyl, linear unsaturated $C_1$ to $C_{20}$ alkyl, branched saturated $C_1$ to $C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl, and $C_7$ to $C_{20}$ arylalkyl, optionally containing one or more heteroatoms of groups 14 to 16 of the Periodic Table (IUPAC),
and/or
$R^7$ and $R^8$ being optionally part of a $C_4$ to $C_{20}$ carbon ring system together with the indenyl carbons to which they are attached, optionally one carbon atom can be substituted by a nitrogen, sulfur or oxygen atom,
$R^9$ are equal to or different from each other and are selected from the group consisting of hydrogen, linear saturated $C_1$ to $C_{20}$ alkyl, linear unsaturated $C_1$ to $C_{20}$ alkyl, branched saturated $C_1$ to $C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl, $C_7$ to $C_{20}$ arylalkyl, $OR^{10}$, and $SR^{10}$,
wherein $R^{10}$ is defined as before,
L is a bivalent group bridging the two indenyl ligands, selected from a $C_2R^{11}_4$ unit or a $SiR^{11}_2$ or $GeR^{11}_2$, wherein,

$R^{11}$ is selected from the group consisting of H, linear saturated $C_1$ to $C_{20}$ alkyl, linear unsaturated $C_1$ to $C_{20}$ alkyl, branched saturated $C_1$ to $C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl or $C_7$ to $C_{20}$ arylalkyl, optionally containing one or more heteroatoms of groups 14 to 16 of the Periodic Table (IUPAC).

**5.** Polypropylene blend according to claim 3 or 4, wherein the transition metal compound of the formula (I) or (II) is selected from rac-methyl(cyclohexyl)silanediyl bis(2-methyl-4-(4-tert-butylphenyl)indenyl)zirconium dichloride, rac-dimethylsilanediyl bis(2-methyl-4-phenyl-1,5,6,7-tetrahydro-s-indacen-1-yl)zirconium dichloride and rac-dimethylsilanediyl bis(2-methyl-4-phenyl-5-methoxy-6-tert-butylindenyl)zirconium dichloride.

**6.** Polypropylene blend according to any one of the preceding claims, wherein the single site catalyst system has been produced by the emulsion/solidification technology comprising the steps of

a) preparing a solution of one or more catalyst components;
b) dispersing said solution in a second solvent to form an emulsion in which said one or more catalyst components are present in the droplets of the dispersed phase,
c) solidifying said dispersed phase to convert said droplets to solid particles and optionally recovering said particles to obtain said catalyst.

**7.** Polypropylene blend according to any one of the preceding claims, wherein component (B) has an $MFR_2$ (230°C) of 0.03 up to 20 g/10min measured according to ISO 1133.

**8.** Polypropylene blend according to any one of the preceding claims, wherein the blend comprises from 51 to 97 wt% of component (A) and 3 to 49 wt% of component (B); based on the sum of component (A) and (B) being 100 wt%.

**9.** Polypropylene blend according to any one of the preceding claims, wherein the blend comprises

a) 85 to 99 wt% of a blend of component (A) and component (B)

b) 1 to 15 wt% of additives comprising

$b_1$) 0 to ≤ 2 wt% of a third polymer
$b_2$) 0.0001 to 2.0 wt% of at least one ß-nucleating agent
$b_3$) optionally one or more further additives usual in the art and not interacting with the beta-nucleating agents.

**10.** Polypropylene blend according to any one of the preceding claims, wherein the blend is partially crystallized in the ß-modification, wherein the amount of ß-modification of the polypropylene blend is at least 50 %.

**11.** Polypropylene blend according to any one of the preceding claims, wherein the blend has an $MFR_2$ (230°C) of 0.2 to 0.5 g/10min measured according to ISO 1133.

**12.** Polypropylene blend according to any one of the preceding claims, wherein the blend has a shear thinning index SHI (0/50) measured according to ISO 6271-10 (200°C) of up to 85.

**13.** Polypropylene blend according to any one of the preceding claims, wherein the blend has a polydispersity index PI in the range of 3.0 to 8.0.

**14.** Polypropylene blend according to any one of the preceding claims, wherein the polypropylene blend in an injection molded state has a flexural modulus measured according to ISO 178 of at least 800 MPa.

**15.** Polypropylene blend according to any one of the preceding claims, wherein the polypropylene blend in an injection molded state has an impact strength measured according the Charpy impact test (ISO 179 (1eA)) at 23°C of at least 10.0 $kJ/m^2$, and/or an impact strength measured according the Charpy impact test (ISO 179 (1eA)) at 0°C of at least 1.5 $kJ/m^2$.

**16.** Use of a polypropylene blend according to any one of the preceding claims for the manufacture of single layer pipes or one layer of a multilayer pipe.

**17.** Pipes comprising a polypropylene blend according to any one of the preceding claims 1-15, wherein the pipes have a pressure test performance measured according ISO 1167:

a) in case of pipes made from homopolymer blends (21 MPa and 20°C, pipe diameter 32 mm; wall thickness 3 mm) of at least 25 h, and (3.5 MPa and 95°C, pipe diameter 32 mm; wall thickness 3 mm) of at least 7000 h and
b) in case of pipes made of copolymer blends (16 MPa and 20°C, pipe diameter 32 mm; wall thickness 3 mm) of at least 8000 h, and (4.2 MPa and 95°C, pipe diameter 32 mm; wall thickness 3 mm) of at least 5000 h.

**Patentansprüche**

**1.** Polypropylenmischung zur Rohrherstellung, die Folgendes aufweist:

einen Strukturviskositätsindex SHI (0/50) von mindestens 5, gemessen gemäß ISO 6271-10;
einen Polydispersitätsindex PI von mindestens 3,0; und
einen $MFR_2$ (230 °C) von 0,1 bis 0,8 g/10 min, gemessen gemäß ISO 1133,
wobei die Mischung Folgendes umfasst:

(a) einen Bestandteil (A), der ein Propylenhomo- oder copolymer ist und der in einem Polymerisationsverfahren in Gegenwart eines Katalysatorsystems mit strukturell einheitlichen Zentren hergestellt wurde, das eine Übergangsmetallverbindung mit der Formel (I) umfasst

Rn(Cp')2MX2 (I)

worin

"M" Zirconium oder Hafnium ist,
jedes "X" unabhängig ein monovalenter anionischer σ-Ligand ist,
jedes "Cp'" ein organischer Ligand des Cyclopentadienyl-Typs ist, der unabhängig aus der Gruppe

ausgewählt ist, bestehend aus substituiertem Cyclopentadienyl, substituiertem Indenyl, substituiertem Tetrahydroindenyl und subsituiertem oder unsubstituiertem Fluorenyl, wobei die organischen Liganden das Übergangsmetall (M) koordinieren,
"R" eine bivalente Verbrückungsgruppe ist, die die organischen Liganden (Cp') verbindet,
"n" 1 oder 2 ist,

und
(b) einen Bestandteil (B), der ein zweites Propylenhomo- oder -copolymer ist und der mit einem Ziegler-Natta-Katalysator hergestellt wurde, wodurch die Molekulargewichtsverteilung in Bezug auf den Polydispersitätsindex der gesamten Zusammensetzung verbreitert wird, wobei entweder der Bestandteil (A) und/oder der Bestandteil (B) und/oder die Polypropylenmischung β-nukleiert ist/sind.

**2.** Polypropylenmischung nach Anspruch 1, wobei der Bestandteil (A) einen $MFR_2$ (230 °C) von nicht mehr als 5,0 g/10 min hat, gemessen gemäß ISO 1133.

**3.** Polypropylenmischung nach Anspruch 1 oder 2, wobei der Bestandteil (A) in Gegenwart eines Katalysatorsystems mit strukturell einheitlichen Zentren hergestellt wurde,
wobei
"n" 1 ist,
optional in Kombination mit einem Cokatalysator (Co), der ein Element (E) der Gruppe 13 des Periodensystems der Elemente (IUPAC) umfasst.

**4.** Polypropylenmischung nach Anspruch 3, wobei die Übergangsmetallverbindung die Formel (II) hat

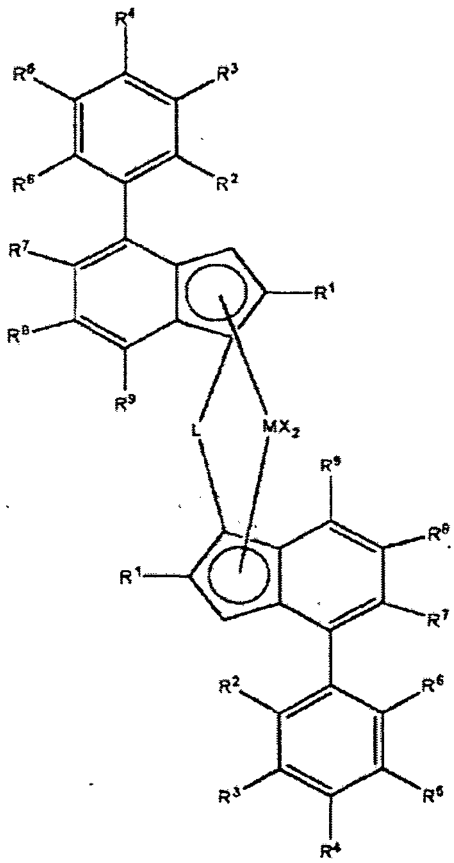

worin,

M Zirconium oder Hafnium ist,
X Liganden mit einer σ-Bindung zu dem Metall "M" sind, wie in der Formel (I) definiert,
$R^1$ gleich oder verschieden voneinander sind und aus der Gruppe ausgewählt sind, bestehend aus linearem

gesättigtem $C_1$ bis $C_{20}$ Alkyl, linearem ungesättigtem $C_1$ bis $C_{20}$ Alkyl, verzweigtem gesättigtem $C_1$-$C_{20}$ Alkyl, verzweigtem ungesättigtem $C_1$ bis $C_{20}$ Alkyl, $C_3$ bis $C_{20}$ Cycloalkyl, $C_6$ bis $C_{20}$ Aryl, $C_7$ bis $C_{20}$ Alkylaryl und $C_7$ bis $C_{20}$ Arylalkyl, wobei optional ein oder mehrere Heteroatome der Gruppen 14 bis 16 des Periodensystems der Elemente (IUPAC) enthalten sind,

$R^2$ bis $R^6$ gleich oder verschieden voneinander sind und aus der Gruppe ausgewählt sind, bestehend aus Wasserstoff, linearem gesättigtem $C_1$-$C_{20}$ Alkyl, linearem ungesättigtem $C_1$-$C_{20}$ Alkyl, verzweigtem gesättigtem $C_1$-$C_{20}$ Alkyl, verzweigtem ungesättigtem $C_1$-$C_{20}$ Alkyl, $C_3$-$C_{20}$ Cycloalkyl, $C_6$-$C_{20}$ Aryl, $C_7$-$C_{20}$ Alkylaryl und $C_7$-$C_{20}$ Arylalkyl, wobei optional ein oder mehrere Heteroatome der Gruppen 14 bis 16 des Periodensystems der Elemente (IUPAC) enthalten sind,

$R^7$ und $R^8$ gleich oder verschieden voneinander sind und aus der Gruppe ausgewählt sind, bestehend aus Wasserstoff, linearem gesättigtem $C_1$ bis $C_{20}$ Alkyl, linearem ungesättigtem $C_1$ bis $C_{20}$ Alkyl, verzweigtem gesättigtem $C_1$ bis $C_{20}$ Alkyl, verzweigtem ungesättigtem $C_1$ bis $C_{20}$ Alkyl, $C_3$ bis $C_{20}$ Cycloalkyl, $C_6$ bis $C_{20}$ Aryl, $C_7$ bis $C_{20}$ Alkylaryl und $C_7$ bis $C_{20}$ Arylalkyl, wobei optional ein oder mehrere Heteroatome der Gruppen 14 bis 16 des Periodensystems der Elemente (IUPAC), $SiR^{10}_3$, $GeR^{10}_3$, $OR^{10}$, $SR^{10}$ und $NR^{10}_2$ enthalten sind, worin

$R^{10}$ aus der Gruppe ausgewählt ist, bestehend aus linearem gesättigtem $C_1$-$C_{20}$ Alkyl, linearem ungesättigtem $C_1$ bis $C_{20}$ Alkyl, verzweigtem gesättigtem $C_1$ bis $C_{20}$ Alkyl, verzweigtem ungesättigtem $C_1$ bis $C_{20}$ Alkyl, $C_3$ bis $C_{20}$ Cycloalkyl, $C_6$ bis $C_{20}$ Aryl, $C_7$ bis $C_{20}$ Alkylaryl und $C_7$ bis $C_{20}$ Arylalkyl, wobei optional ein oder mehrere Heteroatome der Gruppen 14 bis 16 des Periodensystems der Elemente (IUPAC) enthalten sind,

und/oder

$R^7$ und $R^8$ optional zusammen mit den Indenylkohlenstoffen, an die sie gebunden sind, Teil eines $C_4$ bis $C_{20}$ Kohlenstoffringsystems sind, wobei optional ein Kohlenstoffatom durch ein Stickstoff-, Schwefel- oder Sauerstoffatom substituiert sein kann,

$R^9$ gleich oder verschieden voneinander sind und aus der Gruppe ausgewählt sind, bestehend aus Wasserstoff, linearem gesättigtem $C_1$ bis $C_{20}$ Alkyl, linearem ungesättigtem $C_1$ bis $C_{20}$ Alkyl, verzweigtem gesättigtem $C_1$ bis $C_{20}$ Alkyl, verzweigtem ungesättigtem $C_1$ bis $C_{20}$ Alkyl, $C_3$ bis $C_{20}$ Cycloalkyl, $C_6$ bis $C_{20}$ Aryl, $C_7$ bis $C_{20}$ Alkylaryl, $C_7$ bis $C_{20}$ Arylalkyl, $OR^{10}$ und $SR^{10}$,

wobei $R^{10}$ wie oben definiert ist,

L eine bivalente Gruppe ist, die die zwei Indenylliganden verbrückt und die aus einer $C_2R^{11}_4$-Einheit oder einem $SiR^{11}_2$ oder $GeR^{11}_2$ ausgewählt ist, wobei

> $R^{11}$ aus der Gruppe ausgewählt sind, bestehend aus H, linearem gesättigtem $C_1$ bis $C_{20}$ Alkyl, linearem ungesättigtem $C_1$ bis $C_{20}$ Alkyl, verzweigtem gesättigtem $C_1$ bis $C_{20}$ Alkyl, verzweigtem ungesättigtem $C_1$ bis $C_{20}$ Alkyl, $C_3$ bis $C_{20}$ Cycloalkyl, $C_6$ bis $C_{20}$ Aryl, $C_7$ bis $C_{20}$ Alkylaryl oder $C_7$ bis $C_{20}$ Arylalkyl, wobei optional ein oder mehrere Heteroatome der Gruppen 14 bis 16 des Periodensystems der Elemente (IUPAC) enthalten sind.

**5.** Polypropylenmischung nach Anspruch 3 oder 4, wobei die Übergangsmetallverbindung mit der Formel (I) oder (II) aus rac-Methyl(cyclohexyl)silandiyl-bis(2-methyl-4-(4-tert-butylphenyl)indenyl) zirconiumdichlorid, rac-Dimethylsilandiyl-bis(2-methyl-4-phenyl-1,5,6,7-tetrahydro-s-indacen-1-yl)zirconiumdichlorid und rac-Dimethylsilandiyl-bis(2-methyl-4-phenyl-5-methoxy-6-tert-butylindenyl)zirconiumdichlorid ausgewählt ist.

**6.** Polypropylenmischung nach einem der vorhergehenden Ansprüche, wobei das Katalysatorsystem mit strukturell einheitlichen Zentren durch die Emulsions/Verfestigungs-Technologie hergestellt wurde, welche die folgenden Schritte umfasst:

> a) Herstellen einer Lösung aus ein oder mehreren Katalysatorbestandteilen;
> b) Dispergieren der Lösung in einem zweiten Lösungsmittel, um eine Emulsion zu bilden, in der die ein oder mehreren Katalysatorbestandteile in den Tröpfchen der dispergierten Phase vorliegen;
> c) Verfestigen der dispergierten Phase, um die Tröpfchen in feste Partikel umzuwandeln, und optional Gewinnen der Partikel, um den Katalysator zu erhalten.

**7.** Polypropylenmischung nach einem der vorhergehenden Ansprüche, wobei der Bestandteil (B) einen $MFR_2$ (230 °C) von 0,03 bis 20 g/10 min hat, gemessen gemäß ISO 1133.

**8.** Polypropylenmischung nach einem der vorhergehenden Ansprüche, wobei die Mischung 51 bis 97 Gew.-% des Bestandteils (A) und 3 bis 49 Gew.-% des Bestandteils (B) umfasst; basierend auf der Summe aus den Bestandteilen (A) und (B), welche 100 Gew.-% beträgt.

**9.** Polypropylenmischung nach einem der vorhergehenden Ansprüche, wobei die Mischung Folgendes umfasst:

a) 85 bis 99 Gew.-% einer Mischung aus dem Bestandteil (A) und dem Bestandteil (B)
b) 1 bis 15 Gew.-% an Zusatzstoffen, umfassend:

$b_1$) 0 bis ≤ 2 Gew.-% eines dritten Polymers
$b_2$) 0,0001 bis 2,0 Gew.-% von mindestens einem β-nukleierenden Mittel
$b_3$) optional ein oder mehrere weitere Zusatzstoffe, die auf dem Fachgebiet üblich sind und nicht mit den β-nukleierenden Mitteln interagieren.

**10.** Polypropylenmischung nach einem der vorhergehenden Ansprüche, wobei die Mischung teilweise in der β-Modifikation kristallisiert ist, wobei das Ausmaß der β-Modifikation von der Polypropylenmischung mindestens 50 % beträgt.

**11.** Polypropylenmischung nach einem der vorhergehenden Ansprüche, wobei die Mischung einen $MFR_2$ (230 °C) von 0,2 bis 0,5 g/10 min hat, gemessen gemäß ISO 1133.

**12.** Polypropylenmischung nach einem der vorhergehenden Ansprüche, wobei die Mischung einen Strukturviskositätsindex SHI (0/50) von bis zu 85 hat, gemessen gemäß ISO 6271-10 (200 °C).

**13.** Polypropylenmischung nach einem der vorhergehenden Ansprüche, wobei die Mischung einen Polydispersitätsindex PI im Bereich von 3,0 bis 8,0 hat.

**14.** Polypropylenmischung nach einem der vorhergehenden Ansprüche, wobei die Polypropylenmischung in einem spritzgegossenen Zustand ein Biegemodul von mindestens 800 MPa hat, gemessen gemäß ISO 178.

**15.** Polypropylenmischung nach einem der vorhergehenden Ansprüche, wobei die Polypropylenmischung in einem spritzgegossenen Zustand eine Schlagzähigkeit von mindestens 10,0 $kJ/m^2$, gemessen gemäß Charpy Schlagzähigkeitstest (ISO 179 (1eA)) bei 23 °C, und/oder eine Schlagzähigkeit von mindestens 1,5 $kJ/m^2$ hat, gemessen gemäß Charpy Schlagzähigkeitstest (ISO 179 (1eA)) bei 0 °C.

**16.** Verwendung einer Polypropylenmischung nach einem der vorhergehenden Ansprüche zur Herstellung von Einschichtrohren oder von einer Schicht eines Mehrschichtrohrs.

**17.** Rohre, umfassend eine Polypropylenmischung nach einem der vorhergehenden Ansprüche 1 - 15, wobei die Rohre der folgende Leistungsfähigkeit in Drucktests aufweisen, gemessen gemäß ISO 1167:

a) in dem Fall von Rohren, die aus Homopolymermischungen hergestellt sind, von mindestens 25 h (21 MPa und 20 °C, Rohrdurchmesser 32 mm; Wandstärke 3 mm) und von mindestens 7000 h (3,5 MPa und 95 °C, Rohrdurchmesser 32 mm; Wandstärke 3 mm); und
b) in dem Fall von Rohren, die aus Copolymermischungen hergestellt sind, von mindestens 8000 h (16 MPa und 20 °C, Rohrdurchmesser 32 mm; Wandstärke 3 mm) und von mindestens 5000 h (4,2 MPa und 95 °C, Rohrdurchmesser 32 mm; Wandstärke 3 mm).

## Revendications

**1.** Mélange de polypropylène pour production de conduits ayant

- un indice de fluidification par cisaillement SHI (0/50) mesuré selon la norme ISO 6271-10 d'au moins 5 ;
- un indice de polydispersité PI d'au moins 3,0 ; et
- un $MFR_2$ (230 °C) de 0,1 à 0,8 g/10 min mesuré selon la norme ISO 1133 le mélange comprenant

(a) un composant (A) étant un homo- ou copolymère de propylène produit dans un procédé de polymérisation en présence d'un système de catalyseur à site unique
comprenant un composé à base de métal de transition répondant à la formule (I)

$$Rn(Cp')2MX2 \qquad (I)$$

dans laquelle

- « M » représente un atome de zirconium ou d'hafnium,
- chaque « X » représente indépendamment un σ-ligand anionique monovalent,
- chaque « Cp' » représente un ligand organique de type cyclopentadiényle indépendamment choisi dans le groupe constitué des groupes cyclopentadiényle substitué, indényle substitué, tétrahydroindényle substitué et fluorényle substitué ou non substitué, lesdits ligands organiques étant coordonnés au métal de transition (M),
- « R » représente un groupe de pontage bivalent reliant lesdits ligands organiques (Cp'),
- « n » vaut 1 ou 2,

et
(b) un composant (B) étant un deuxième homo- ou copolymère de propylène préparé à l'aide d'un catalyseur de Ziegler-Natta, qui élargit la répartition du poids moléculaire en termes d'indice de polydispersité de la composition entière,
dans lequel le composant (A) et/ou le composant (B) et/ou le mélange de polypropylène est/sont β-nucléés.

2. Mélange de polypropylène selon la revendication 1, dans lequel le composant (A) a un $MFR_2$ (230 °C) non supérieur à 5,0 g/10 min mesuré selon la norme ISO 1133.

3. Mélange de polypropylène selon la revendication 1 ou 2, dans lequel le composant (A) a été produit en présence du système de catalyseur à site unique dans lequel

- « n » vaut 1,
facultativement en association avec un cocatalyseur (Co) comprenant un élément (E) du groupe 13 du tableau périodique (IUPAC).

4. Mélange de polypropylène selon la revendication 3, dans lequel le composé à base de métal de transition répond à la formule (II)

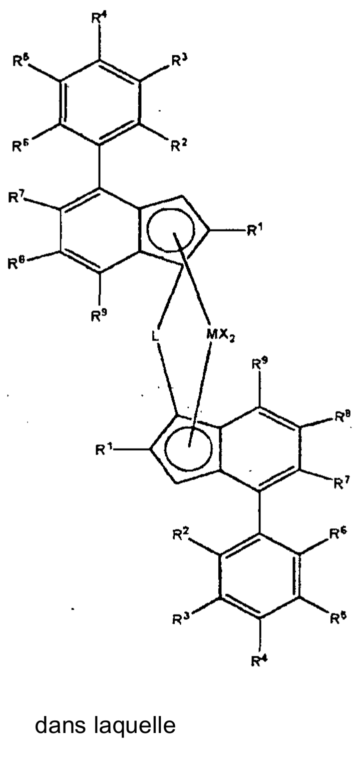

dans laquelle

- M représente un atome de zirconium ou d'hafnium,
- les radicaux X représentent des ligands présentant une liaison σ au métal « M », tel que défini pour la formule (I),
- les radicaux $R^1$ sont identiques les uns aux autres ou différents les uns des autres, et sont choisis dans le

groupe constitué des groupes alkyle saturé linéaire en $C_1$ à $C_{20}$, alkyle insaturé linéaire en $C_1$ à $C_{20}$, alkyle saturé ramifié en $C_1$ à $C_{20}$, alkyle insaturé ramifié en $C_1$ à $C_{20}$, cycloalkyle en $C_3$ à $C_{20}$, aryle en $C_6$ à $C_{20}$, alkylaryle en $C_7$ à $C_{20}$ et arylalkyle en $C_7$ à $C_{20}$, contenant facultativement un ou plusieurs hétéroatomes des groupes 14 à 16 du tableau périodique (IUPAC),

- les radicaux $R^2$ à $R^6$ sont identiques les uns aux autres ou différents les uns des autres et sont choisis dans le groupe constitué de l'atome d'hydrogène et des groupes alkyle saturé linéaire en $C_1$ à $C_{20}$, alkyle insaturé linéaire en $C_1$ à $C_{20}$, alkyle saturé ramifié en $C_1$ à $C_{20}$, alkyle insaturé ramifié en $C_1$ à $C_{20}$, cycloalkyle en $C_3$ à $C_{20}$, aryle en $C_6$ à $C_{20}$, alkylaryle en $C_7$ à $C_{20}$ et arylalkyle en $C_7$ à $C_{20}$, contenant facultativement un ou plusieurs hétéroatomes des groupes 14 à 16 du tableau périodique (IUPAC),
- les radicaux $R^7$ et $R^8$ sont identiques les uns aux autres ou différents les uns des autres et choisis dans le groupe constitué de l'atome d'hydrogène et des groupes alkyle saturé linéaire en $C_1$ à $C_{20}$, alkyle insaturé linéaire en $C_1$ à $C_{20}$, alkyle saturé ramifié en $C_1$ à $C_{20}$, alkyle insaturé ramifié en $C_1$ à $C_{20}$, cycloalkyle en $C_3$ à $C_{20}$, aryle en $C_6$ à $C_{20}$, alkylaryle en $C_7$ à $C_{20}$, arylalkyle en $C_7$ à $C_{20}$, contenant facultativement un ou plusieurs hétéroatomes des groupes 14 à 16 du tableau périodique (IUPAC), $SiR^{10}_3$, $GeR^{10}_3$, $OR^{10}$, $SR^{10}$ et $NR^{10}2$,

dans lequel

- $R^{10}$ est choisi dans le groupe constitué des groupes alkyle saturé linéaire en $C_1$ à $C_{20}$, alkyle insaturé linéaire en $C_1$ à $C_{20}$, alkyle saturé ramifié en $C_1$ à $C_{20}$, alkyle insaturé ramifié en $C_1$ à $C_{20}$, cycloalkyle en $C_3$ à $C_{20}$, aryle en $C_6$ à $C_{20}$, alkylaryle en $C_7$ à $C_{20}$ et arylalkyle en $C_7$ à $C_{20}$, contenant facultativement un ou plusieurs hétéroatomes des groupes 14 à 16 du tableau périodique (IUPAC), et/ou
- les radicaux $R^7$ et $R^8$ faisant facultativement partie d'un système de noyau carboné en $C_4$ à $C_{20}$ conjointement avec les atomes de carbone indényliques auxquels ils sont fixés, facultativement un atome de carbone pouvant être substitué par un atome d'azote, de soufre ou d'oxygène,
- les radicaux $R^9$ sont identiques les uns aux autres ou différents les uns des autres et sont choisis dans le groupe constitué de l'atome d'hydrogène et des groupes alkyle saturé linéaire en $C_1$ à $C_{20}$, alkyle insaturé linéaire en $C_1$ à $C_{20}$, alkyle saturé ramifié en $C_1$ à $C_{20}$, alkyle insaturé ramifié en $C_1$ à $C_{20}$, cycloalkyle en $C_3$ à $C_{20}$, aryle en $C_6$ à $C_{20}$, alkylaryle en $C_7$ à $C_{20}$, arylalkyle en $C_7$ à $C_{20}$, $OR^{10}$ et $SR^{10}$,

formules dans lesquelles $R^{10}$ est défini comme ci-dessus,

- L représente un groupe bivalent reliant par un pont les deux ligands indényles, choisi parmi une unité $C_2R^{11}_4$ ou un groupe $SiR^{11}_2$ ou $GeR^{11}_2$, formules dans lesquelles,
- $R^{11}$ est choisi dans le groupe constitué de l'atome d'H et des groupes alkyle saturé linéaire en $C_1$ à $C_{20}$, alkyle insaturé linéaire en $C_1$ à $C_{20}$, alkyle saturé ramifié en $C_1$ à $C_{20}$, alkyle insaturé ramifié en $C_1$ à $C_{20}$, cycloalkyle en $C_3$ à $C_{20}$, aryle en $C_6$ à $C_{20}$, alkylaryle en $C_7$ à $C_{20}$ ou arylalkyle en $C_7$ à $C_{20}$, contenant facultativement un ou plusieurs hétéroatomes des groupes 14 à 16 du tableau périodique (IUPAC).

**5.** Mélange de polypropylène selon la revendication 3 ou 4, dans lequel le composé à base de métal de transition répondant à la formule (I) ou (II) est choisi parmi le dichlorure de rac-méthyl(cyclohexyl)silanediyl-bis(2-méthyl-4-(4-tert-butylphényl)indényl)zirconium, le dichlorure de rac-diméthylsilanediyl-bis(2-méthyl-4-phényl-1,5,6,7-tétrahydro-s-indacén-1-yl)zirconium et le dichlorure de rac-diméthylsilanediyl-bis(2-méthyl-4-phényl-5-méthoxy-6-tert-butylindényl)zirconium.

**6.** Mélange de polypropylène selon l'une quelconque des revendications précédentes, dans lequel le système de catalyseur à site unique a été produit par la technologie d'émulsion/solidification comprenant les étapes de

a) préparation d'une solution d'un ou plusieurs composants de catalyseur ;
b) dispersion de ladite solution dans un deuxième solvant pour former une émulsion dans laquelle lesdits un ou plusieurs composants de catalyseur sont présents dans les gouttelettes de la phase dispersée,
c) solidification de ladite phase dispersée pour convertir lesdites gouttelettes en particules solides et facultativement récupération desdites particules pour obtenir ledit catalyseur.

**7.** Mélange de polypropylène selon l'une quelconque des revendications précédentes, dans lequel le composant (B) a un $MFR_2$ (230 °C) de 0,03 jusqu'à 20 g/10 min mesuré selon la norme ISO 1133.

**8.** Mélange de polypropylène selon l'une quelconque des revendications précédentes, lequel mélange comprend de 51 à 97 % en poids de composant (A) et de 3 à 49 % en poids de composant (B) ; en se basant sur une somme

des composants (A) et (B) de 100 % en poids.

**9.** Mélange de polypropylène selon l'une quelconque des revendications précédentes, lequel mélange comprend

a) de 85 à 99 % en poids d'un mélange de composant (A) et de composant (B)
b) de 1 à 15 % en poids d'additifs comprenant

$b_1$) de 0 à ≤ 2 % en poids d'un troisième polymère
$b_2$) de 0,0001 à 2,0 % en poids d'au moins un agent de β-nucléation
$b_3$) facultativement un ou plusieurs autres additifs habituels dans l'art et n'interagissant pas avec les agents de bêta-nucléation.

**10.** Mélange de polypropylène selon l'une quelconque des revendications précédentes, lequel mélange est partiellement cristallisé dans la modification β, la quantité de modification β du mélange de polypropylène étant au moins de 50 %.

**11.** Mélange de polypropylène selon l'une quelconque des revendications précédentes, lequel mélange a un $MFR_2$ (230 °C) de 0,2 à 0,5 g/10 min mesuré selon la norme ISO 1133.

**12.** Mélange de polypropylène selon l'une quelconque des revendications précédentes, lequel mélange a un indice de fluidification par cisaillement SHI (0/50) mesuré selon la norme ISO 6271-10 (200 °C) pouvant atteindre 85.

**13.** Mélange de polypropylène selon l'une quelconque des revendications précédentes, lequel mélange a un indice de polydispersité PI dans la plage de 3,0 à 8,0.

**14.** Mélange de polypropylène selon l'une quelconque des revendications précédentes, lequel mélange de polypropylène dans un état moulé par injection a un module de flexion mesuré selon la norme ISO 178 d'au moins 800 MPa.

**15.** Mélange de polypropylène selon l'une quelconque des revendications précédentes, lequel mélange de polypropylène dans un état moulé par injection a une résistance aux chocs mesurée selon l'essai de flexion par choc selon Charpy (norme ISO 179 (1eA)) à 23 °C d'au moins 10,0 kJ/$m^2$, et/ou une résistance aux chocs mesurée selon l'essai de flexion par choc selon Charpy (norme ISO 179 (1eA)) à 0 °C d'au moins 1,5 kJ/$m^2$.

**16.** Utilisation d'un mélange de polypropylène selon l'une quelconque des revendications précédentes pour la fabrication de conduits à une seule couche ou d'une couche d'un conduit multicouche.

**17.** Conduits comprenant un mélange de polypropylène selon l'une quelconque des revendications précédentes 1 à 15, lesquels conduits ont une performance à l'épreuve de pression mesurée selon la norme ISO 1167 :

a) dans le cas de conduits fabriqués à partir de mélanges d'homopolymère (21 MPa et 20 °C, diamètre de conduit 32 mm ; épaisseur de la paroi 3 mm) d'au moins 25 h, et (3,5 MPa et 95 °C, diamètre de conduit 32 mm ; épaisseur de la paroi 3 mm) d'au moins 7 000 h et
b) dans le cas de conduits fabriqués à partir de mélanges de copolymère (16 MPa et 20 °C, diamètre de conduit 32 mm ; épaisseur de la paroi 3 mm) d'au moins 8 000 h, et (4,2 MPa et 95 °C, diamètre de conduit 32 mm ; épaisseur de la paroi 3 mm) d'au moins 5 000 h.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1448631 A
- EP 2014715 A
- EP 2279216 A
- EP 2361950 A
- EP 2216347 A
- WO 9426794 A
- WO 9212182 A
- EP 0887379 A
- WO 9858976 A
- WO 03051934 A
- WO 2006069733 A
- WO 0148034 A
- EP 0682066 A
- EP 1741725 A1


### Non-patent literature cited in the description


- **CHEN et al.** *Polymer,* 2002, vol. 43, 6505-14
- **RESCONI et al.** *Chemical Reviews,* 2000, vol. 100 (4), 1263
- **HEINO, E.L. ; LEHTINEN, A ; TANNER, J. ; SEPPÄLÄ, J. NESTE OY ; PORVOO, FINLAND.** Rheological characterization of polyethylene fractions. *Theor. Appl. Rheol., Proc. Int. Congr. Rheol., 11th,* 1992, vol. 1, 360-362
- **HEINO, EEVA-LEENA ; BOREALISPOLYMERS OY ; PORVOO, FINLAND.** The influence of molecular structure on some rheological properties of polyethylene. *Annual Transactions of the Nordic Rheology Society,* 1995
- **A. TURNER-JONES.** *Makromol. Chem,* 1964, vol. 75, 134